(19) Europäisches Patentamt European Patent Office Office européen des brevets

(11) **EP 4 712 679 A1**

(12) **EUROPEAN PATENT APPLICATION**
published in accordance with Art. 153(4) EPC

(43) Date of publication:
**18.03.2026 Bulletin 2026/12**

(21) Application number: **24734787.5**

(22) Date of filing: **10.05.2024**

(51) International Patent Classification (IPC):
**H04W 76/28** (2018.01)   **H04W 52/02** (2009.01)
**H04B 7/06** (2006.01)   **H04W 72/21** (2023.01)
**H04W 72/23** (2023.01)   **H04L 5/00** (2006.01)

(52) Cooperative Patent Classification (CPC):
**H04B 7/06; H04L 5/00; H04W 52/02; H04W 72/21;
H04W 72/23; H04W 76/28**

(86) International application number:
**PCT/KR2024/006360**

(87) International publication number:
**WO 2024/237592 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.05.2023 US 202363465900 P
26.09.2023 KR 20230129638**

(71) Applicant: **LG Electronics Inc.
Yeongdeungpo-gu
Seoul 07336 (KR)**

(72) Inventors:
• **KIM, Seonwook
Seoul 06772 (KR)**
• **YANG, Suckchel
Seoul 06772 (KR)**
• **KIM, Hyungtae
Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **APPARATUS AND METHOD FOR REPORTING CHANNEL STATE INFORMATION ON BASIS OF CELL DISCONTINUOUS TRANSMISSION OR CELL DISCONTINUOUS RECEPTION OPERATION IN WIRELESS COMMUNICATION SYSTEM**

(57)    The present disclosure relates to reporting channel state information (CSI) based on a cell discontinuous transmission (DTX) or cell discontinuous reception (DRX) operation in a wireless communication system, and a method performed by a terminal may include receiving first configuration information on a CSI resource, receiving second configuration information for a CSI report configuration, receiving third configuration information on cell DTX, and transmitting or dropping a CSI report corresponding to the CSI report configuration based on the cell DTX.

FIG. 20

**Description**

**Technical Field**

The present disclosure relates to a wireless communication system, and more particularly, to an apparatus and a method for reporting channel state information (CSI) based on a cell discontinuous transmission (DTX) or cell discontinuous reception (DRX) operation in a wireless communication system.

**Background Art**

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

**Disclosure**

**Technical Problem**

The present disclosure relates to an apparatus and a method for giving feedback on channel state information (CSI) by considering an energy saving operation of a base station in a wireless communication system.

The present disclosure relates an apparatus and a method for preventing contention between a cell discontinuous transmission (DTX) or cell discontinuous reception (DRX) operation of a base station and a CSI report operation of a terminal in a wireless communication system.

The present disclosure relates to an apparatus and a method for reporting CSI based on a cell DTX/DRX operation in a wireless communication system.

The present disclosure relates to an apparatus and a method for synchronizing a CSI report operation with a cell DTX/DRX operation in a wireless communication system.

The present disclosure relates to an apparatus and a method for reporting CSI based on a cell discontinuous transmission (DTX) or cell discontinuous reception (DRX) operation in a wireless communication system.

The present disclosure relates to an apparatus and a method for controlling a CSI report in a second cell based on a cell DTX/DRX operation of a first cell in a wireless communication system.

The present disclosure relates to an apparatus and a method for controlling a CSI report in a second cell based on whether or not a CSI-reference signal (RS) is provided according to cell DTX/DRX of a first cell in a wireless communication system.

The present disclosure relates to an apparatus and a method for determining whether or not to drop or omit a CSI report based on a cell DTX/DRX operation in a wireless communication system.

The present disclosure relates to an apparatus and a method for controlling a CSI report by considering sub-configurations of the CSI report based on a cell DTX/DRX operation in a wireless communication system.

The present disclosure relates to an apparatus and a method for determining whether or not to drop or omit a CSI report fully or partially based on condition evaluation according to each sub-configuration of the CSI report based on a cell DTX/DRX operation in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

Technical Solution

As an example of the present disclosure, a method performed by a terminal in a wireless communication system may include receiving first configuration information on a channel state information (CSI) resource, receiving second configuration information for a CSI report configuration, receiving third configuration information on cell discontinuous transmission (DTX), and transmitting or dropping a CSI report corresponding to the CSI report configuration based on the cell DTX, based on the cell DTX being configured, the CSI report may be transmitted no later than a CSI reference resource based on at least one CSI-RS transmission occasion being received on a serving cell with activated cell DTX for channel measurement or interference measurement in an active time or active period of cell DTX of the serving cell, and based on the cell DTX being configured, the CSI report may be dropped no later than the CSI reference resource based on at least one CSI-RS transmission occasion not being received on a serving cell with activated cell DTX for channel measurement or interference measurement in an active time or active period of cell DTX of the serving cell.

As an example of the present disclosure, a terminal in a wireless communication system may include a transceiver and a processor coupled with the transceiver, the processor may be configured to receive first configuration information on a channel state information (CSI) resource, to receive second configuration information for a CSI report configuration, to receive third configuration information on cell discontinuous transmission (DTX), and to transmit or drop a CSI report corresponding to the CSI report configuration based on the cell DTX, based on the cell DTX being configured, the CSI report may be transmitted no later than a CSI reference resource based on at least one CSI-RS transmission occasion being received on a serving cell with activated cell DTX for channel measurement or interference measurement in an active time or active period of cell DTX of the serving cell, and based on the cell DTX being configured, the CSI report may be dropped no later than the CSI reference resource based on at least one CSI-RS transmission occasion not being received on a serving cell with activated cell DTX for channel measurement or interference measurement in an active time or active period of cell DTX of the serving cell.

As an example of the present disclosure, a communication device may include at least one processor and at least one computer memory coupled with the at least one processor and storing an instruction that instructs operations when executed by the at least one processor, and the operations may include receiving first configuration information on a channel state information (CSI) resource, receiving second configuration information for a CSI report configuration, receiving third configuration information on cell discontinuous transmission (DTX), and transmitting or dropping a CSI report corresponding to the CSI report configuration based on the cell DTX, based on the cell DTX being configured, the CSI report may be transmitted no later than a CSI reference resource based on at least one CSI-RS transmission occasion being received on a serving cell with activated cell DTX for channel measurement or interference measurement in an active time or active period of cell DTX of the serving cell, and based on the cell DTX being configured, the CSI report may be dropped no later than the CSI reference resource based on at least one CSI-RS transmission occasion not being received on a serving cell with activated cell DTX for channel measurement or interference measurement in an active time or active period of cell DTX of the serving cell.

As an example of the present disclosure, a non-transitory computer-readable medium storing at least one instruction includes the at least one instruction that is executable by a processor, the at least one instruction may instruct a device to receive first configuration information on a channel state information (CSI) resource, to receive second configuration information for a CSI report configuration, to receive third configuration information on cell discontinuous transmission (DTX), and to transmit or drop a CSI report corresponding to the CSI report configuration based on the cell DTX, based on the cell DTX being configured, the CSI report may be transmitted no later than a CSI reference resource based on at least one CSI-RS transmission occasion being received on a serving cell with activated cell DTX for channel measurement or interference measurement in an active time or active period of cell DTX of the serving cell, and based on the cell DTX being configured, the CSI report may be dropped no later than the CSI reference resource based on at least one CSI-RS transmission occasion not being received on a serving cell with activated cell DTX for channel measurement or interference measurement in an active time or active period of cell DTX of the serving cell.

The above-described aspects of the present disclosure are only a part of the preferred embodiments of the present disclosure, and various embodiments reflecting technical features of the present disclosure may be derived and understood by those skilled in the art on the basis of the detailed description of the present disclosure provided below.

## Advantageous Effects

As is apparent from the above description, the embodiments of the present disclosure have the following effects.

According to the present disclosure, energy consumption of the base station is reduced based on cell discontinuous transmission (DTX) or cell discontinuous reception (DRX) operation, and further, the complexity and power consumption of the terminal performing CSI reporting can be reduced.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

**Description of Drawings**

FIG. 1 illustrates an example of a structure of a wireless communication system to which the present disclosure may be applied.

FIG. 2 illustrates an example of a wireless device applicable to the present disclosure.

FIG. 3 illustrates examples of physical channels used in a wireless communication system, to which the present disclosure may be applied, and an example of a general signal transmission and reception method using the physical channels.

FIG. 4 illustrates examples of beams applicable to the present disclosure.

FIG. 5 illustrates an example of a downlink beam management (DL BM) procedure using a synchronization signal block (SSB) applicable to the present disclosure.

FIG. 6 illustrates an example of a DL BM procedure using channel state information (CSI)-reference signal (RS) applicable to the present disclosure.

FIG. 7 illustrates an example of a reception beam determination procedure of a terminal applicable to the present disclosure.

FIG. 8 illustrates an example of a transmission beam determination procedure of a base station applicable to the present disclosure

FIG. 9 illustrates an example of resource allocation in a time and frequency domain applicable to the present disclosure.

FIG. 10 illustrates an example of beam sweeping for uplink beam management (UL BM) using a sounding reference signal (SRS) applicable to the present disclosure.

FIG. 11 illustrates an example of a UL BM procedure using an SRS applicable to the present disclosure.

FIG. 12 illustrates an example of an operation procedure of a base station supporting a network energy saving (NES) technology applicable to the present disclosure.

FIG. 13 illustrates an example of a procedure for a cell discontinuous transmission (DTX)/cell discontinuous reception (DRX) operation applicable to the present disclosure.

FIG. 14 illustrates an example of a procedure for channel state information (CSI) measurement and report applicable to the present disclosure.

FIG. 15A to FIG. 15C illustrate examples of states of antenna elements according to an embodiment of the present disclosure.

FIG. 16 illustrates an example of a cell DTX pattern and/or a cell DRX pattern according to an embodiment of the present disclosure.

FIG. 17 illustrates an example of a procedure of performing CSI reporting according to an embodiment of the present disclosure.

FIG. 18 illustrates an example of a procedure of transmitting or dropping a CSI report according to an embodiment of the present disclosure.

FIG. 19 illustrates an example of a procedure of transmitting or dropping a CSI report based on cell DTX/DRX according to an embodiment of the present disclosure.

FIG. 20 illustrates an example of a procedure of performing CSI reporting in a cell DTX/DRX configuration situation according to an embodiment of the present disclosure.

Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial intelligence/machine learning (AI/ML), but may not be limited thereto.

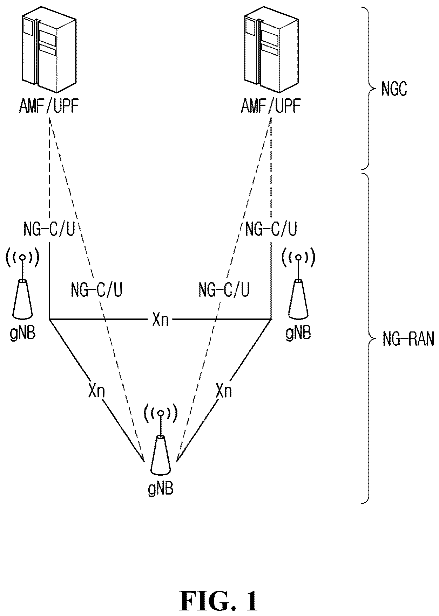

FIG. 1 exemplifies a structure of a wireless communication system to which the present disclosure may be applied. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

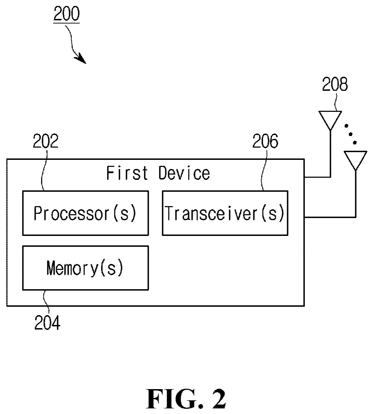

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information related to an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs related to sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

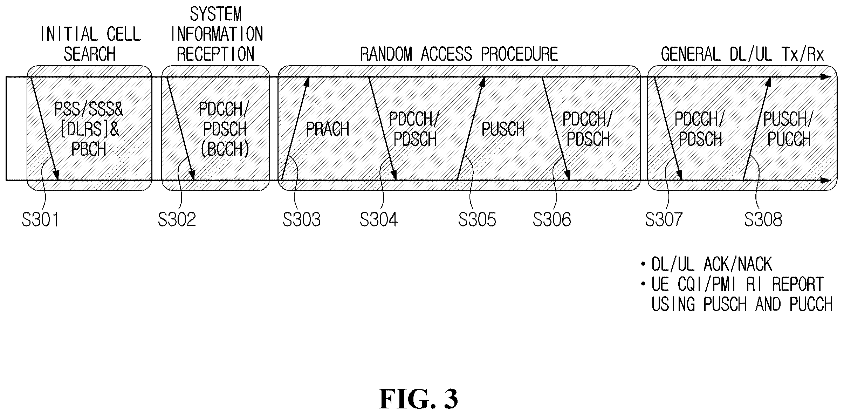

FIG. 3 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S301). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S302).

Meanwhile, in case the terminal accesses to the base station for the first time or does not have a radio resource for signal transmission, the terminal may perform a random access procedure (RACH) for the base station (S303 to S306). To this end, the terminal may transmit a specific sequence as a preamble through a physical random access channel (PRACH) (S303 and S305) and receive a response message for the preamble through a PDCCH and a corresponding PDSCH (S304 and S306). In the case of a contention-based RACH, a contention resolution procedure may be additionally performed.

The terminal, which has performed the above-described procedure, may subsequentially perform PDCCH/PDSCH reception (S307) and physical uplink shared channel (PUSCH)/physical uplink control channel (PUCCH) transmission (S308) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

Beam management (BM)

A BM procedure is L1(layer 1)/L2(layer 2) procedures to obtain and maintain a set of beams of a base station (e.g., a gNB, a TRP, etc.) and/or terminal (e.g., a UE) beams which may be used for downlink(DL) and uplink(UL) transmission/reception, it may include the following procedures and terms.

- Beam measurement: An operation that a base station or a UE measures a property of a received beamformed signal
- Beam determination: An operation that a base station or a UE selects its Tx beam / Rx beam
- Beam sweeping: An operation that a spatial region is covered by using a Tx and/or Rx beam for a certain time interval in a pre-determined method
- Beam report: An operation that a UE reports information of a beamformed signal based on beam measurement

A BM procedure may be classified into (1) a DL BM procedure using a synchronization signal (SS)/ physical broadcast channel (PBCH) block or a CSI-RS and (2) an UL BM procedure using a sounding reference signal (SRS).
In addition, each BM procedure may include Tx beam sweeping for determining a Tx Beam and Rx beam sweeping for determining a Rx beam.

<DL BM>

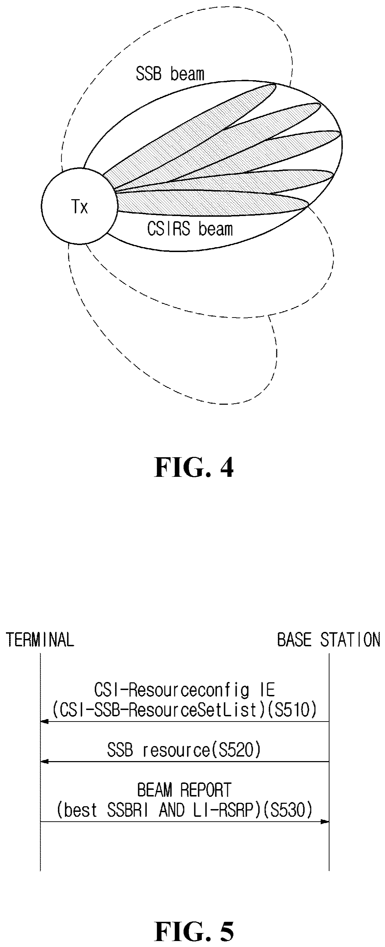

A DL BM procedure may include (1) transmission of beamformed DL reference signals (RSs) of a base station (e.g., a CSI-RS or a SS Block (SSB)) and (2) beam reporting of a terminal.
Here, beam reporting may include preferred DL RS identifier(s) (IDs) and corresponding L1-reference signal received power (RSRP).
The DL RS ID may be a SSB resource indicator (SSBRI) or a CSI-RS resource indicator (CRI).
As shown in FIG. 4, an SSB beam and a CSI-RS beam may be used for beam measurement. A measurement metric is an L1-RSRP for each resource/block. An SSB is used for coarse beam measurement, and CSI-RS may be used for fine beam measurement. An SSB may be used for both Tx beam sweeping and Rx beam sweeping.
Rx beam sweeping using an SSB may be performed while a UE changes a Rx beam for a same SSBRI across a plurality of SSB bursts. Herein, one SS burst includes one or more SSBs, and one SS burst set includes one or more SSB bursts.

<DL BM using SSB>

FIG. 5 is a flowchart showing an example of a DL BM procedure using an SSB.
A configuration for a beam report using an SSB is performed during CSI/beam configuration in a RRC-connected state (or RRC-connected mode).

- A terminal receives a CSI-ResourceConfig IE including SSB-ResourceSetList including SSB resources that are used for BM (S410).

Table 1 shows an example of the CSI-ResourceConfig IE, and as shown in Table 1, a BM configuration using an SSB is not defined separately, and the SSB is configured like a CSI-RS resource.

[Table 1]

```
-- ASN1START
-- TAG-CSI-RESOURCECONFIG-START

CSI-ResourceConfig ::=              SEQUENCE {
     csi-ResourceConfigId           CSI-ResourceConfigId,
     csi-RS-ResourceSetList         CHOICE {
       nzp-CSI-RS-SSB                  SEQUENCE {
            nzp-CSI-RS-ResourceSetList          SEQUENCE (SIZE (1..maxNrofNZP-CSI-RS-
ResourceSetsPerConfig)) OF NZP-CSI-RS-ResourceSetId OPTIONAL,
            csi-SSB-ResourceSetList             SEQUENCE (SIZE (1..maxNrofCSI-SSB-
ResourceSetsPerConfig)) OF CSI-SSB-ResourceSetId    OPTIONAL
       },
       csi-IM-ResourceSetList              SEQUENCE (SIZE (1..maxNrofCSI-IM-
ResourceSetsPerConfig)) OF CSI-IM-ResourceSetId
     },

     bwp-Id                         BWP-Id,
     resourceType                   ENUMERATED { aperiodic, semiPersistent, periodic },
     ...
}

-- TAG-CSI-RESOURCECONFIGTOADDMOD-STOP
-- ASN1STOP
```

In Table 1, the SSB-ResourceSetList parameter represents a list of SSB resources that are used for beam management and reporting in a single resource set. Herein, an SSB resource set may be configured as {SSBx1, SSBx2, SSBx3, SSBx4, ...}. - An SSB index may be defined from 0 to 63. The terminal receives an SSB resource based on the SSB-ResourceSetList from the base station (S420).

- In case CSI-RS reportConfig related to a report about SSBRI and L1-RSRP is configured, the terminal (beam) reports a best SSBRI and L1-RSRP corresponding thereto to the base station (S430).

That is, in case reportQuantity of the CSI-RS reportConfig IE is configured as 'ssb-Index-RSRP', the terminal reports the best SSBRI and L1-RSRP corresponding thereto to the base station.

In addition, in case a CSI-RS resource is configured in a same OFDM symbol(s) as an SS/PBCH block (SSB) and 'QCL-TypeD' is applicable, the terminal may assume that a CSI-RS and the SSB is quasi co-located from the perspective of 'QCL-TypeD'.

Herein, the QCL-TypeD may mean that antenna ports are quasi co-located (QCL) from the perspective of a spatial Rx parameter. When the terminal receives a plurality of DL antenna ports having a QCL Type D relationship, a same reception beam may be applied. In addition, the terminal does not expect that no CSI-RS will be configured in an RE overlapping a RE of an SSB.

<DL BM using CSI-RS>

As for the usage of CSI-RS, i) in case a repetition parameter is configured in a specific CSI-RS resource set but TRS_info is not configured, a CSI-RS is used for beam management. ii) in case the repetition parameter is not configured but TRS_info is configured, the CSI-RS is used for a tracking reference signal (TRS). iii) in case the repetition parameter is not configured and TRS_info is not configured, the CSI-RS is used for CSI acquisition.

Such a repetition parameter may be configured only for CSI-RS resource sets associated with CSI-ReportConfig having a report of L1 RSRP or 'No Report (or None)'.

If a terminal is configured with CSI-ReportConfig with reportQuantity being configured as 'cri-RSRP' or 'none' and CSI-ResourceConfig for channel measurement (higher layer parameter resourcesForChannelMeasurement) does not include a higher layer parameter 'trs-Info' but includes NZP-CSI-RS-ResourceSet with higher layer parameter 'repetition' being configured, the terminal may consist only of a port of a same number (1-port or 2-port) having a higher layer parameter 'nrofPorts' for all CSI-RS resources in NZP-CSI-RS-ResourceSet.

In case (higher layer parameter) repetition is set to 'ON', it is related to a Rx beam sweeping procedure of a terminal. In this case, when the terminal is configured with NZP-CSI-RS-ResourceSet, the terminal may assume that at least one CSI-RS resource in the NZP-CSI-RS-ResourceSet is transmitted to a same downlink spatial domain transmission filter. That is, at least one CSI-RS resource in the NZP-CSI-RS-ResourceSet is transmitted through a same Tx beam. Herein, at least one CSI-RS resource in the NZP-CSI-RS-ResourceSet may be transmitted with a different OFDM symbol. In addition, the terminal does not expect to receive different periodicities in all CSI-RS resources of the NZP-CSI-RS-Resourceset.

On the other hand, in case repetition is set to 'OFF', it is related to a Tx beam sweeping procedure of a base station. In this case, when repetition is set to 'OFF', a terminal does not assume that at least one CSI-RS resource in the NZP-CSI-RS-ResourceSet is transmitted to a same downlink spatial domain transmission filter. That is, at least one CSI-RS resource in the NZP-CSI-RS-ResourceSet is transmitted through a different Tx beam.

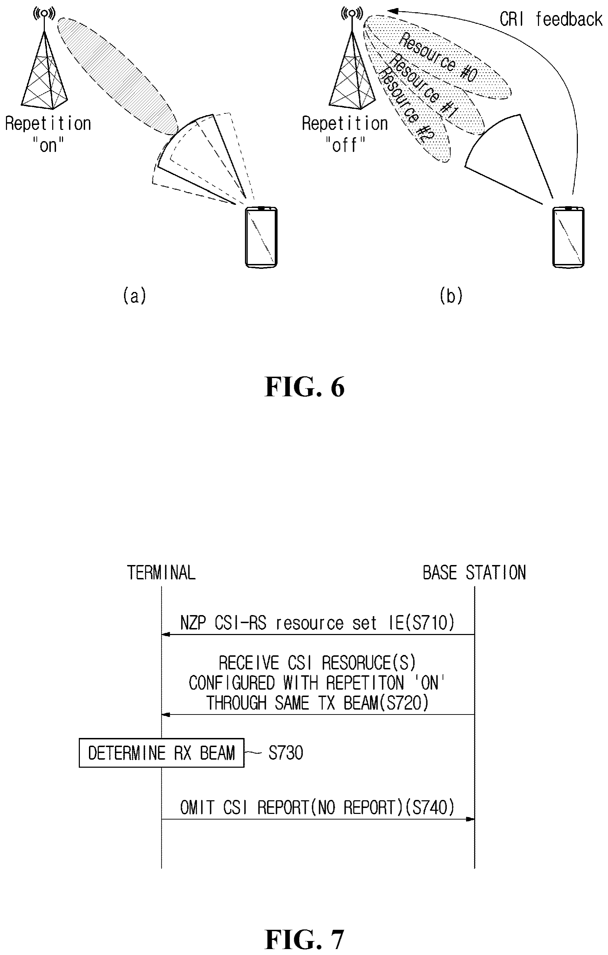

FIG. 6 shows an example of a DL BM procedure using a CSI-RS. (a) of FIG. 6 shows a Rx beam determination (or refinement) procedure of a terminal, and (b) of FIG. 6 shows a Tx beam sweeping procedure of a base station. In addition, (a) of FIG. 6 is a case where a repetition parameter is set to 'ON', and (b) of FIG. 6 is a case where the repetition parameter is set to 'OFF'.

Referring to (a) of FIG. 6 and FIG. 7, a Rx beam determination procedure of a terminal will be described.

FIG. 7 is a flowchart showing an example of a Rx beam determination process of a terminal.

- The terminal receives a NZP CSI-RS resource set IE including higher layer parameter repetition from a base station through RRC signaling (S610). Herein, the repetition parameter is set to 'ON'.
- The terminal repeatedly receives a resource(s) in a CSI-RS resource set with repetition 'ON' from different OFDM symbols through a same Tx beam (or DL spatial domain transmission filter) of the base station (S620).
- The terminal determines its Rx beam (S630).
- The terminal omits a CSI report (S640). In this case, reportQuantity of CSI report config may be set to 'No report (or None)'.

That is, the terminal may omit the CSI report when repetition is set to 'ON'.

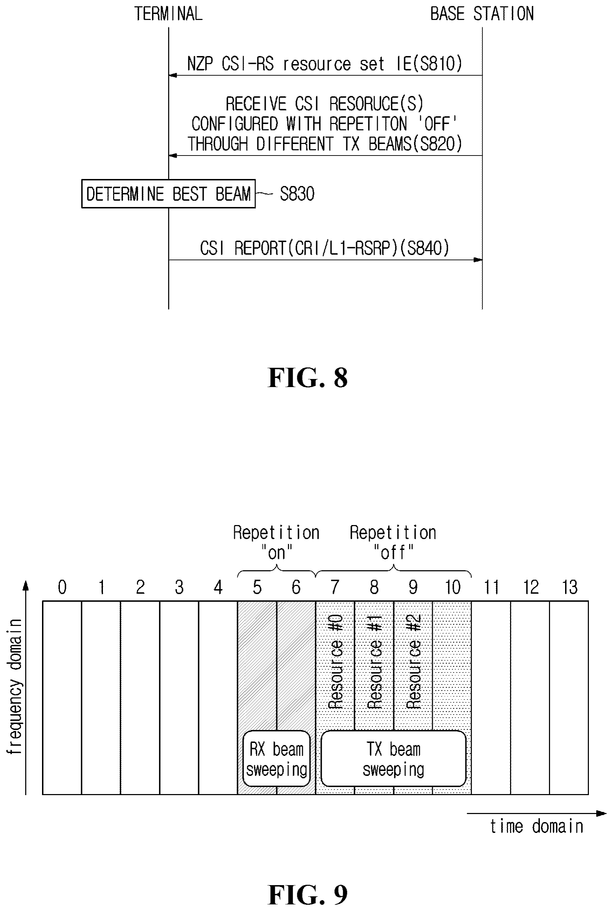

Referring to (b) of FIG. 6 and FIG. 8, a Tx beam determination process of a base station will be described.

FIG. 8 is a flowchart showing an example of a Tx beam determination process of a base station.

- A terminal receives a NZP CSI-RS resource set IE including higher layer parameter repetition from a base station through RRC signaling (S810). Herein, the repetition parameter is set to 'OFF' and is related to a Tx beam sweeping procedure of the base station.
- The terminal receives resources in a CSI-RS resource set with repetition 'OFF' from different Tx beams (or DL spatial domain transmission filter) of the base station (S820).
- The terminal selects (or determines) a best beam (S830).
- The terminal reports an ID for the selected beam and relevant quality information (e.g., L1-RSRP) to the base station (S840). In this case, reportQuantity of CSI report config may be set to 'CRI + L1-RSRP'.

That is, in case a CSI-RS is transmitted for BM, the terminal reports a CRI and a related L1-RSRP to the base station.

FIG. 9 shows an example of resource allocation in a time and frequency domain related to an operation of FIG. 6.

That is, in case repetition is set to 'ON' in a CSI-RS resource set, a plurality of CSI-RS resources are repeatedly used by applying a same Tx beam, and in case repetition is set to 'OFF' in the CSI-RS resource set, different CSI-RS resources may be seen to be transmitted through different Tx beams.

<DL BM-related beam indication>

A terminal may be RRC-configured with a list of a maximum of M candidate transmission configuration indication (TCI) states for the purpose of quasi co-location (QCL) indication. Here, M may be 64.

Each TCI state may be configured as one RS set. Each ID of a DL RS for spatial QCL purpose (QCL Type D) at least in a RS set may refer to one of DL RS types such as SSB, P-CSI RS, SP-CSI RS, and A-CSI RS.

Initialization/update of IDs of DL RS(s) in a RS set used at least for spatial QCL may be performed at least through explicit signaling.

Table 2 shows an example of TCI-State IE. A TCI-State IE associates one or two DL reference signals (RSs) with a corresponding quasi co-location (QCL) type.

[Table 2]

```
-- ASN1START
-- TAG-TCI-STATE-START

TCI-State ::=                          SEQUENCE {
     tci-StateId                          TCI-StateId,
     qcl-Type1                            QCL-Info,
     qcl-Type2                            QCL-Info
                          OPTIONAL,  -- Need R
     ...
}

QCL-Info ::=                           SEQUENCE {
     cell                                 ServCellIndex
                          OPTIONAL,  -- Need R
     bwp-Id                                  BWP-Id
                          OPTIONAL, -- Cond CSI-RS-Indicated
     referenceSignal                      CHOICE {
          csi-rs                              NZP-CSI-RS-ResourceId,
          ssb                                 SSB-Index
     },
     qcl-Type                             ENUMERATED {typeA, typeB, typeC, typeD},
     ...
}

-- TAG-TCI-STATE-STOP
-- ASN1STOP
```

In Table 2, bwp-Id parameter represents a DL BWP where a RS is located, cell parameter represents a carrier where a RS is located, and referencesignal parameter represents a reference antenna port(s), which is a source of quasi co-location for a corresponding target antenna port(s), or a reference signal including the reference antenna port(s). The target antenna port(s) may be CSI-RS, PDCCH DMRS, or PDSCH DMRS. As an example, in order to indicate QCL reference RS information for NZP CSI-RS, a corresponding TCI state ID may be indicated in NZP CSI-RS resource configuration information. As another example, in order to indicate QCL reference information for PDCCH DMRS antenna port(s), TCI state ID may be indicated in each CORESET configuration. As yet anther example, in order to QCL reference information for PDSCH DMRS antenna port(s), TCI state ID may be indicated through DCI.

<Quasi-co Location (QCL)>

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

-    'QCL-TypeA': {Doppler shift, Doppler spread, average delay, delay spread}
-    'QCL-TypeB': {Doppler shift, Doppler spread}
-    'QCL-TypeC': {Doppler shift, average delay}

- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

<UL BM>

For UL BM, beam reciprocity (or beam correspondence) between a Tx beam and a Rx beam may be valid or may not be valid according to terminal implementation. If reciprocity between a Tx beam and a Rx beam is valid both in a base station and a terminal, a UL beam pair may be matched by a DL beam pair. But, when reciprocity between a Tx beam and a Rx beam is not valid in any one of a base station and a terminal, a process for determining a UL beam pair is required separately from a DL beam pair determination.

In addition, although both of a base station and a terminal maintain beam correspondence, a base station may use a UL BM procedure for determining a DL Tx beam without requesting a terminal to report a preferred beam.

UL BM may be performed through beamformed UL SRS transmission and whether UL BM of an SRS resource set is applied may be configured by a (higher layer parameter) usage. When a usage is configured as 'BeamManagement(BM)', only one SRS resource may be transmitted in each of a plurality of SRS resource sets in a given time instant.

A terminal may be configured with one or more SRS(Sounding Reference Symbol) resource sets configured by (a higher layer parameter) SRS-ResourceSet (through higher layer signaling, RRC signaling, etc.) For each SRS resource set, a UE may be configured with K≥1 SRS resources (a higher layer parameter SRS-resource). Here, K is a natural number and the maximum number of K is indicated by SRS_capability.

Like DL BM, an UL BM procedure may be also classified into Tx beam sweeping of a terminal and Rx beam sweeping of a base station.

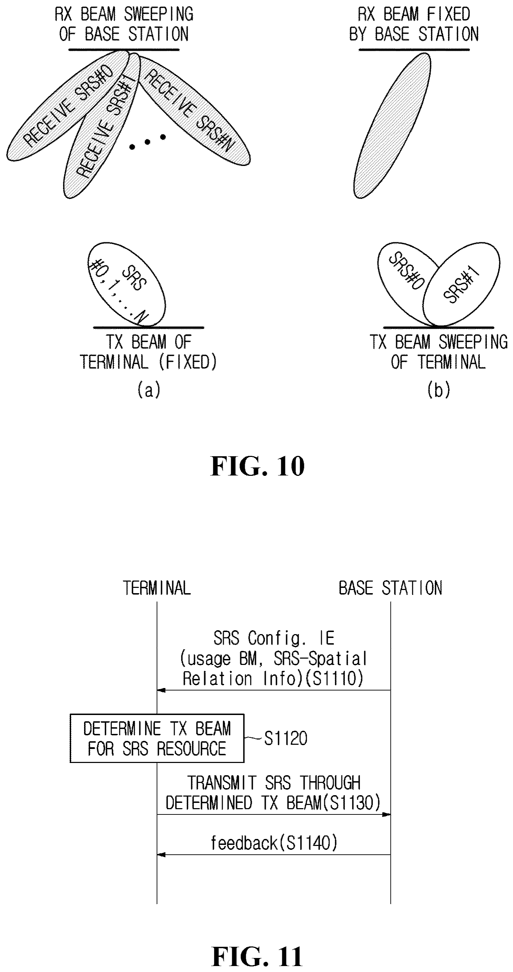

FIG. 10 shows an example of a UL BM procedure using an SRS. (a) of FIG. 10 shows a Rx beam determination procedure of a base station, and (b) of FIG. 10 shows a Tx beam sweeping procedure of a terminal.

FIG. 11 is a flowchart showing an example of a UL BM procedure using an SRS.

- A terminal receives RRC signaling (e.g., SRS-Config IE) including a (higher layer parameter) usage parameter configured as 'beam management' from a base station (S1110).

Table 3 shows an example of an SRS-Config information element (IE), and the SRS-Config IE is used for SRS transmission configuration. The SRS-Config IE includes a list of SRS-Resources and a list of SRS-ResourceSet. Each SRS resource set means a set of SRS-resources.

A network may trigger transmission of an SRS resource set by using a configured aperiodicSRS-Resource-Trigger (L1 DCI).

[Table 3]

```
-- ASN1START
-- TAG-MAC-CELL-GROUP-CONFIG-START

SRS-Config ::=                              SEQUENCE {
    srs-ResourceSetToReleaseList            SEQUENCE (SIZE(1..maxNrofSRS-ResourceSets)) OF SRS-
ResourceSetId          OPTIONAL, -- Need N
    srs-ResourceSetToAddModList             SEQUENCE (SIZE(1..maxNrofSRS-ResourceSets)) OF SRS-
ResourceSet              OPTIONAL, -- Need N

    srs-ResourceToReleaseList               SEQUENCE (SIZE(1..maxNrofSRS-Resources)) OF SRS-
ResourceId               OPTIONAL, -- Need N
    srs-ResourceToAddModList                SEQUENCE (SIZE(1..maxNrofSRS-Resources)) OF SRS-
Resource                 OPTIONAL, -- Need N

    tpc-Accumulation                        ENUMERATED {disabled}
                         OPTIONAL, -- Need S
    ...
}
SRS-ResourceSet ::=                         SEQUENCE {
    srs-ResourceSetId                       SRS-ResourceSetId,
    srs-ResourceIdList                      SEQUENCE (SIZE(1..maxNrofSRS-ResourcesPerSet)) OF
SRS-ResourceId      OPTIONAL, -- Cond Setup

    resourceType                            CHOICE {
        aperiodic                           SEQUENCE {
            aperiodicSRS-ResourceTrigger            INTEGER (1..maxNrofSRS-TriggerStates-1),
            csi-RS                                  NZP-CSI-RS-ResourceId
                         OPTIONAL, -- Cond NonCodebook
            slotOffset                              INTEGER (1..32)
                         OPTIONAL, -- Need S
            ...
        },
        semi-persistent                     SEQUENCE {
            associatedCSI-RS                        NZP-CSI-RS-ResourceId
                         OPTIONAL, -- Cond NonCodebook
            ...
        },
        periodic                            SEQUENCE {
            associatedCSI-RS                        NZP-CSI-RS-ResourceId
                         OPTIONAL, -- Cond NonCodebook
            ...
        }
    },
usage                                       ENUMERATED {beamManagement, codebook,
nonCodebook, antennaSwitching},
    alpha                                       Alpha
                         OPTIONAL, -- Need S
    p0                                          INTEGER (-202..24)
                         OPTIONAL, -- Cond Setup
    pathlossReferenceRS                         CHOICE {
        ssb-Index                               SSB-Index,
        csi-RS-Index                            NZP-CSI-RS-ResourceId
```

```
SRS-SpatialRelationInfo ::=        SEQUENCE {
      servingCellId                      ServCellIndex
      OPTIONAL,  -- Need S
      referenceSignal                    CHOICE {
           ssb-Index                           SSB-Index,
           csi-RS-Index                        NZP-CSI-RS-ResourceId,
           srs                                 SEQUENCE {
                  resourceId                        SRS-ResourceId,
                  uplinkBWP                         BWP-Id
           }
      }
}


SRS-ResourceId ::=                                            INTEGER      (0..maxNrofSRS-
Resources-1)
```

In Table 3, usage represents a higher layer parameter indicating whether or not an SRS resource set is used for beam management and is used for codebook-based or non-codebook-based transmission. A usage parameter corresponds to an L1 parameter 'SRS-SetUse'. 'spatialRelationInfo' is a parameter representing a configuration of spatial relation between a reference RS and a target SRS. Herein, the reference RS may be an SBS, a CSI-RS, or an SRS corresponding to 'SRS-SpatialRelationInfo'. The usage is configured for each SRS resource set.- A terminal determines a Tx beam for an SRS resource to be transmitted based on SRS-SpatialRelation Info included in the SRS-Config IE (S1120). Herein, SRS-SpatialRelation Info is configured for each SRS resource and represents whether or not to apply a same beam as a beam used in an SSB, a CSI-RS, or an SRS for each SRS resource. In addition, SRS-SpatialRelationInfo may be configured or not configured in each SRS resource.

- If SRS-SpatialRelationInfo is configured in an SRS resource, a same beam as a beam used in an SSB, a CSI-RS, or an SRS is applied for transmission. However, if SRS-SpatialRelationInfo is not configured in an SRS resource, the terminal randomly determines a Tx beam and transmits an SRS through the determined Tx beam (S1130).

Specifically, for a P-SRS with 'SRS-ResourceConfigType' being configured as 'periodic':

i) In case SRS-SpatialRelationInfo is configured as 'SSB/PBCH', a UE transmits a corresponding SRS resource by applying a spatial domain transmission filter identical with a spatial domain Rx filter used for receiving an SSB/PBCH (or generated from the filter); or
ii) In case SRS-SpatialRelationInfo is configured as 'CSI-RS', the UE transmits an SRS resource by applying a same spatial domain transmission filter used for receiving a periodic CSI-RS or SP CSI-RS; or
iii) In case SRS-SpatialRelationInfo is configured as 'SRS', the UE transmits a corresponding SRS resource by applying a same spatial domain transmission filter used for transmitting a periodic SRS.

In case 'SRS-ResourceConfigType' is configured as 'SP-SRS' or 'AP-SRS', a similar operation of beam determination and transmission may also be applied.

- Additionally, a terminal may receive or not receive feedback on an SRS from a base station, as described in the following 3 cases (S1140).

i) In case Spatial_Relation_Info is configured for all SRS resources in an SRS resource set, the terminal transmits the SRS by a beam indicated by the base station. For example, in case Spatial_Relation_Info indicates a same SSB, CRI or SRI, the terminal repeatedly transmits the SRS by a same beam. This case corresponds to FIG. G(a) for selection of a Rx beam by the base station.
ii) Spatial_Relation_Info may not be configured for all SRS resources in an SRS resource set. In this case, the terminal may freely an SRS beam for transmission. That is, this case corresponds to FIG. G(b) for Tx beam sweeping by the terminal.
iii) Spatial_Relation_Info may be configured only for some SRS resources in an SRS resource set. In this case, for a configured SRS resource, an SRS may be transmitted by an indicated beam, and for an SRS resource with Spatial_Relation_Info not being configured, the terminal may randomly apply a Tx beam for transmission.

Network Energy Saving (NES)

As the energy saving of a base station may contribute to constructing an eco-friendly network through reduction of carbon emissions and reducing operational expenditures (OPEX) of communication service providers, it is considered as an important factor in a wireless communication system like 3GPP. Especially, as a high transmission rate is required with the introduction of 5G communication, base stations should be equipped with a larger number of antennas and provide services through broader bandwidths and frequency bands. Thus, according to a recent study, the energy cost of base stations has reached almost 20% of total OPEX. Accordingly, a 5G system is adopting various technologies for reduction of energy consumption, referred to as network energy savings (NES), and standardization of relevant technologies will be continuously performed. Specifically, Rel-18, which has recently been undertaken, discusses the following techniques.

[Table 4]

| |
|---|
| 1. Specify SSB-less SCell operation for inter-band CA for FR1 and co-located cells, if found feasible by RAN4 study, where a UE measures SSB transmitted on PCell or another SCell for an SCell's time/frequency synchronization (including downlink AGC), and L1/L3 measurements, including potential enhancement on SCell activation procedures if necessary [RAN4, RAN2] |
| 2. Specify enhancement on cell DTX/DRX mechanism including the alignment of cell DTX/DRX and UE DRX in RRC_CONNECTED mode, and inter-node information exchange on cell DTX/DRX [RAN2, RAN1, RAN3]<br>    • Note: No change for SSB transmission due to cell DTX/DRX.<br>    • Note: The impact to IDLE/INACTIVE UEs due to the above enhancement should be avoided. |
| 3. Specify the following techniques in spatial and power domains<br>    • Specify necessary enhancements on CSI and beam management related procedures including measurement and report, and signaling to enable efficient adaptation of spatial elements (e.g. antenna ports, active transceiver chains) [RAN1, RAN2]<br>    • Specify necessary enhancements on CSI related procedures including measurement and report, and signaling to enable efficient adaptation of power offset values between PDSCH and CSI-RS [RAN1, RAN2]<br>    • Note: Above objectives are only for UE specific channels/signals<br>    • Note: Legacy UE CSI/CSI-RS capabilities applies when considering total number of CSI reports and requirements |
| 4. Specify mechanism(s) to prevent legacy UEs camping on cells adopting the Rel-18 NES techniques, if necessary [RAN2] |
| 5. Specify CHO procedure enhancement(s) in case source/target cell is in NES mode [RAN2] |
| 6. Specify inter-node beam activation and enhancements on restricting paging in a limited area [RAN3]. |
| 7. Specify the corresponding RRM/RF core requirements, if necessary, for the above features [RAN4] |

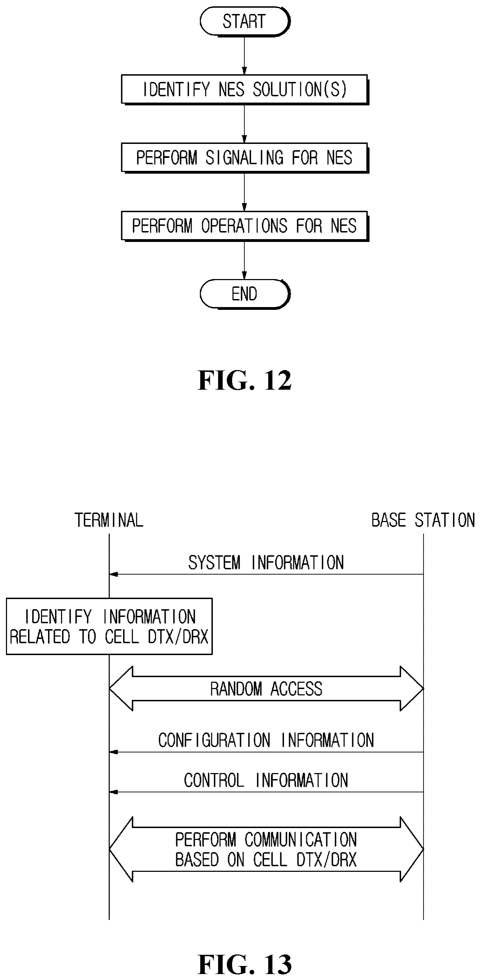

As an NES technology is applied, a base station may perform operations of controlling on/off during a predetermined time duration on a time axis, controlling a Tx/Rx resource for a UE-common or UE-specific signal/channel, changing an amount of frequency-axis resource, controlling transmission power, or turning on/off an antenna port and a transmission-reception point (TRP) in a spatial domain. FIG. 12 illustrates an example of an operation procedure of a base station supporting an NES technology. Referring to FIG. 12, the base station identifies an NEX solution(s) to be applied. The NES solution(s) may be related to control (e.g., on/off) of signal transmission/reception, beam operation, a handover procedure, and channel measurement and report. Which NES solution(s) is to be applied may be selected adaptively according to a current situation (e.g., a cell load degree, a feature of accessed terminals, etc.) or be predefined. When identifying the NES solution(s), the base station performs signaling for NES. A detailed procedure of signaling may be different according to the identified NES solution(s). For example, the base station may transmit common information on the NES solution(s), transmit configuration information necessary for an NES operation to at least one terminal, or control information for progress of an NES operation to at least one terminal. In addition, the base station may receive NES-related capability information from at least one terminal. Next, the base station performs operations for NES. Herein, the base station may perform the operations for NES based on the signaling that is performed previously. That is, according to system information, configuration information and control information that are delivered through signaling, the base station may turn on/off transmission/reception of a specific signal, turn on/off elements of a spatial domain, or control a resource for transmitting and receiving a measurement signal.

Through a procedure as shown in FIG. 12, an NES technology may be implemented. Examples of NES solutions implementable by the procedure as shown in FIG. 12 are as follows.

· Intra-system energy saving solution: A RAN node may request a neighbor RAN node to switch at least one SSB beam into its inactivated cell or may perform paging to a terminal in an inactive state (e.g., a stationary terminal) by using a limited beam set.

· Inter-system energy saving solution: An NG-RAN node having a capacity booster cell may autonomously switch the cell to inactive state.

· SSB-less SCell solution: If an SSB or an SSB-based RRM measurement timing configuration (SMTC) is not provided for SCell, a terminal may acquire a timing criterion and an AGC source from another serving cell. In FR1 or FR2, a base station may configure intra-band CA or inter-band CA including SCell without SSB transmission, and in this case, SSB/SIB transmission may be triggered by a wake up signal (WUS) of the terminal. Accordingly, because a period of a common channel/signal such as SSB increases, the base station may stay in a sleep state for a longer time.

· Cell discontinuous transmission/discontinuous reception (DTX/DRX) solution : In order to reduce a downlink Tx/uplink Rx operation time of a base station, a periodic cell DTX/DRX pattern (e.g., active and inactive durations) may be configured commonly for terminals within a cell having a corresponding feature. Herein, a cell DTX pattern and a cell DRX pattern may be separately configured and activated, and a maximum of two cell DTX/DRX patterns may be configured for each MAC entity. In case cell DTX is configured and activated, at least one of monitoring of an SPS occasion or monitoring of a PDCCH may be suspended during a cell DTX-inactive duration. In case cell DRX is configured and activated, at least one of transmission in a CG resource and SR transmission may be suspended during a cell DRX-inactive duration. Cell DTX/DRX may be activated/inactivated through RRC signaling or L1 group-common signaling.

· For cell DTX/DRX, parameters such as an active duration and a cycle may be configured. An active duration is a duration in which a terminal stands by to receive a PDCCH or an SPS occasion and to transmit SR or CG, and a cycle specifies periodic repetition of an active duration and an inactive duration. In case both cell DTX and cell DRX are configured, parameters such as an active duration and a cycle are common. If a base station recognizes an emergency call or a public safety-related service (e.g., MPS or MCS), a network may release or inactivate a cell DTX/DRX configuration in order to not to affect a corresponding service. In addition, at least a partial overlap is required between an active duration of connected mode DRX of the terminal and an active duration of cell DTX/DRX. For example, that is, a connected mode DRX period of the terminal may be a multiple of a cell DTX/DRX period or vice versa.

· Conditional handover (CHO) solution: A CHO procedure, which is performed in a way execution of handover is determined by a terminal, is used while an NES technology is applied (e.g., when a cell activates or turns off cell DTX/DRX). In this case, to execute CHO for a candidate cell, the terminal may use an NES-specific CHO event, and as an additional triggering condition therefor, reception of DCI, which activates CHO condition(s) configured as an NES event indication, may be applied.

· Spatial and power domain adaptation solution: In order to support gNB for transceiver muting and/or transmission power adaptation, a terminal may be configured to report a plurality of CSI entries in a CSI report based on a plurality of sub-configurations. Each sub-configuration corresponds to a power offset between a spatial domain adaptation pattern (e.g., a subset of an available spatial element) and/or a data channel (e.g., PDSCH) and a CSI-RS. According to application of the spatial and power domain adaptation solution, CSI configuration, measurement and/or report operations may be affected.

Cell DTX/DRX

In order to operate a base station in sleep mode for a relatively long time without wake-up, base station DTX/DRX is proposed for NES. A base station may configure cell DTX and configure on-duration of C-DRX of terminals within an active period of the cell DTX, thereby reducing energy consumption by using DTX transmission in a low system load situation. FIG. 13 illustrates an example of a procedure for a cell DTX/DRX operation.

Referring to FIG. 13, a base station transmits system information to a terminal, and the terminal identifies cell DTX/DRX-related information. For example, the system information may include an MIB, an SIB1, and the like. In relation to an NES technology, the MIB may include information related to cell barring (e.g., *cellBarred*), and the SIB1 may include information related to a cell barring state (e.g., *cellBarredNES*). Specifically, in case *cellBarred* included in the MIB is set to a value indicating not being barred (e.g., *notBarred*), the terminal may determine that a corresponding cell is not barred, irrespective of whether or not NES cell DTX/DRX is supported. On the other hand, in case *cellBarred* included in the received MIB is set to a value indicating that a cell is barred (e.g., *barred*), a terminal, which does not support NES cell DTX/DRX, may determine that the cell is barred. However, in case the terminal has a capability to support NES cell DTX/DRX, the terminal checks the SIB1 to determine a cell barring state. If *cellBarred* of the MIB is set to *barred* and *cellBarredNES* is absent in the SIB1, a terminal supporting NES cell DTX/DRX may handle a corresponding cell as barred and perform cell reselection to another cell. On the other hand, in case *cellBarred* of the MIB is set to *barred* and *cellBarredNES* is included in the SIB1, the terminal supporting NES cell DTX/DRX may determine that a corresponding cell is not barred.

In FIG. 13, it is assumed that a terminal has a capability to support NES cell DTX/DRX, *cellBarred* of an MIB is set to *notBarred* or *cellBarred* of the MIB is set to *barred* and *cellBarredNES* is included in an SIB1. Accordingly, in order to access a base station, the terminal may perform a random access procedure and then perform communication. Herein, the base station may perform a cell DTX/DRX operation and transmit configuration information related to the cell DTX/DRX operation to the terminal. The configuration information related to the cell DTX/DRX operation (e.g., *CellDTXDRX-Config*) may include at least one parameter related to cell DTX/DRX and include, for example, at least one of an on-duration timer, a cycle start offset, a slot offset, a configuration type (e.g., DTX, DRX or DTX-DRX), and an active state of DTX/DRX (e.g., active, inactive). In addition, the configuration information may further include information for receiving and interpreting control information related to cell DRX[TS1]/DRX (e.g., DCI-related information).

Next, the base station transmits control information related to cell DTX/DRX to the terminal. The control information related to cell DTX/DRX may include DCI that has a designated format (e.g., format 2_9). In case an operation for a serving cell according to at least one of a cell DTX operation and a cell DRX operation is configured by configuration information (e.g., *cellDTXDRX-Config*), the terminal may identify a search space set (e.g., Type3-PDCCH CSS set) for monitoring a PDCCH delivering control information with a designated format for an active time through a higher layer parameter (e.g., *SearchSpace)* and acquire a location of information on a serving cell within the control information through a higher layer parameter (e.g., *positionInDCI-cellDTRX*). In addition, the terminal may acquire control information based on the identified search space set and the location.

Control information related to cell DTX/DRX may be used to indicate activation or inactivation of cell DTX and/or cell DRX and/or to provide an NES-mode indicator and include, for example, at least one block including a cell DTX/DRX indicator and the NES-mode indicator. Herein, in case a serving cell is configured as a supplementary uplink (SUL) carrier, activation or inactivation indication of cell DRX by the cell DTX/DRX indicator may be applied to both a UL carrier and an SUL carrier.

Next, the terminal and the base station may perform communication based on cell DTX/DRX. Specifically, the base station may turn on/off transmission/reception of a signal according to a configuration related to cell DTX/DRX, and the terminal may selectively monitor a signal from the base station accordingly. During DTX-OFF, the base station enters into sleep mode to reduce energy consumption. Herein, a base station DTX cycle may be aligned with a cycle of terminal DRX. Base station DTX-ON may fully cover DRX-ON of the terminal. Furthermore, the base station may align transmission of Xn/NG and transmission Uu for the purpose of NES. A DTX/DRX mechanism may trigger switching of reference signal resource set groups, and the base station may perform a dormancy-like behaviour that sparsely transmits or does not transmit an SSB, an SIB and a CSI-RS in order to reduce energy consumption. According to a configuration of the base station, the terminal may sparsely receive or does not receive a downlink signal/channel. Once the base station DTX/DRX operation is triggered, the terminal may discontinuously receive a corresponding CSI-RS, SSB, or PDDCH in a DTX/DRX OFF duration.

CSI measurement and report

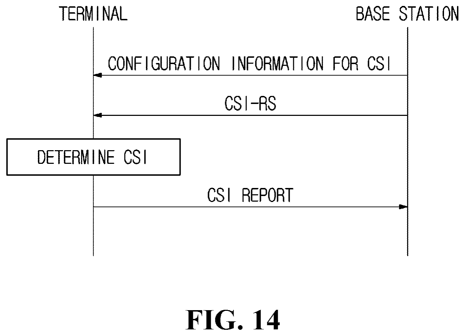

FIG. 14 illustrates an example of a procedure for CSI measurement and report.

Referring to FIG. 14, a base station transmits configuration information for CSI to a terminal. The configuration information for CSI may include information related to a CSI-RS resource or resource set (e.g., time-frequency resource information, sequence information, power information), information related to a CSI report (e.g., report entry (quantity) information, report type information, report resource information, codebook information), information related to CSI measurement, and the like. Herein, in order to assist the base station with transceiver muting and/or transmission power adaptation of the base station, the terminal may be configured to report multiple CSI entries in a CSI report based on a plurality of sub-configurations. Herein, each sub-configuration corresponds to a spatial domain adaptation pattern (e.g., a subset of an available spatial element) and/or a power offset. In addition, as for CSI report, a higher layer parameter (e.g., CSI-ReportConfig) included in configuration information may include a list of sub-configurations, and each sub-configuration may be identified by an identifier (e.g., csi-ReportSubConfigID), correspond to at least one list of CSI-RS resources, correspond to a CSI-RS antenna port subset and/or correspond to a power offset for a PDSCH related to a CSI-RS, in addition to a power control offset-related parameter of CSI-RS resource(s) (e.g., powerControlOffset).

Herein, a CSI-related configuration may include a plurality of sub-configurations. Accordingly, when interpreting configuration information for CSI, the terminal may determine a CSI-RS resource, CSI-RS port mapping, a power offset, a codebook type, a report entry, and the like by considering sub-configurations. In case the terminal is configured by configuration information (e.g., CSI-ReportConfig) related to CSI report including sub-configurations, the terminal does not expect a higher layer parameter (e.g., reportQuantity) related to a report entry to be configured as 'cri-RSRP', 'cri-SINR', 'cri-SINR- Index', 'cri-RSRP-Index', 'none', 'ssb-Index-RSRP', 'ssb-Index-SINR', 'ssb-Index-RSRP- Index', 'ssb-Index-SINR- Index' or 'tdcp'. In addition, in case a type of a CSI report is configured as a semi-persistent CSI report or an aperiodic CSI report, the base station may activate/trigger only some of sub-configurations set to the terminal through MAC-CE or DCI. That is, a trigger state of the aperiodic CSI report may be configured as necessary, and whether or not to activate the semi-persistent CSI report may be controlled by an activation command.

For example, as for a configuration for a report entry, the terminal may determine CSI-RS port index(es) for each CSI-RS resource based on information related to a port subset according to each sub-configuration (hereinafter 'port-subset indicator'). A port-subset indicator may include a bitmap for specifying some of antenna ports for a corresponding CSI-RS resource. Accordingly, the terminal may identify at least one antenna port for a corresponding sub-configuration based on a location of bits set to a positive value (e.g., 1) in a port-subset indicator.

For example, as for a configuration for a report entry, the terminal may determine a codebook type based on whether or not a sub-configuration is present. Specifically, in case sub-configurations are set for a CSI report, the terminal may exclude at least one codebook-type configuration. However, depending on a capability of the terminal, at least one codebook-type is possible to configure.

For example, as for a configuration for a report entry, for each sub-configuration, a power offset value and an NZP CSI-RS resource set may be configured. Herein, depending on whether or not a power offset value is set for each sub-configuration and whether or not an NZP CSI-RS resource set is configured, interpretation of the NZP CSI-RS resource set for each sub-configuration may become different.

When CQI is determined, a higher layer parameter related to time restriction for channel measurement (e.g., timeRestrictionForChannelMeasurements) may be configured. In this case, the terminal should derive a channel estimate for determining CSI based on a latest CSI reference resource. Herein, if cell DTX for a base station is activated, a cell DTX active time may be considered.

CSI is derived based on a CSI reference resource. The CSI reference resource is defined as a group of downlink physical resource blocks corresponding to a band related to CSI derived from a frequency domain and is defined as one downlink slot that is determined based on a higher layer parameter and a sub-carrier spacing in a time domain. After receiving CSI-RS, the terminal should transmit a CSI report no later than the CSI reference resource. Herein, in case sub-configurations are set for the CSI report, the CSI reference resource is considered for each sub-configuration.

In case at least one of a CQI index, PMI and RI is configured to be reported, in a CSI reference resource, in order to derive at least one of the CQI index, PMI and RI, the terminal may assume specific values for the locations and number of symbols occupied in control signaling, the number of PDSCH and DMRS symbols, a sub-carrier spacing of BWP, a bandwidth for CQI report, a CP length and sub-carrier spacing of a reference resource, and a redundancy version (RV). Herein, sub-configurations are set for the CSI report, assumption about an antenna port and EPRE may be determined based on the sub-configurations.

Next, the base station transmits at least one CSI-RS. Accordingly, the terminal may receive the at least one CSI-RS and perform measurement. The at least one CSI-RS may be transmitted a CSI-RS resource or resource set that is configured by configuration information.

Herein, in case the terminal is configured with DRX, the terminal may perform measurement as follows. For example, when the terminal is configured to monitor power saving-related control information (e.g., DCI format 2_6) and a DRX-related time (e.g., drx-onDurationTimer) has not started based on a higher layer parameter (e.g., ps-TransmitOtherPeriodicCSI), if the terminal is configured to report CSI using a report configuration type configured as periodic report and a report entry configured as a different entry from cri-RSRP and ssb-index-RSRP, a latest CSI measurement occasion occurs during a time indicated by drx-onDurationTimer in DRX-related configuration information (e.g., DRX-Config) other than a DRX active time or a DRX active time for CSI to be reported. As another example, when the terminal is configured to monitor power saving-related control information (e.g., DCI format 2_6) and drx-onDurationTimer has not started based on a higher layer parameter (e.g., ps-TransmitPeriodicL1-RSRP), if the terminal is configured to report L1-RSRP using a report configuration type configured as periodic report and a report entry configured as cri-RSRP, a latest CSI measurement occasion occurs during a time indicated by drx-onDurationTimer in DRX-related configuration information (e.g., DRX-Config) other than a DRX active time or a DRX active time for CSI to be reported. In addition, a latest CSI measurement occasion occurs within a DRX active time for CSI to be reported.

Meanwhile, the base station may perform a cell DTX/DRX operation. In this case, during an inactive duration of cell DTX, a terminal configured with cell DTX does not expect to receive a periodic CSI-RS and a semi-persistent CSI-RS, which are configured in a CSI report configuration related to a report entry including at least a rank indicator (RI). In case cell DTX is activated for a serving cell, a latest CSI measurement occasion of a semi-persistent CSI-RS resource or a periodic CSI-RS resource occurs within active periods of cell DTX for CSI report, which are configured by configuration information related to the CSI report related to a report entry including at least a RI.

When receiving at least one CSI-RS, the terminal determines CSI. In other words, the terminal performs CSI calculation. Herein, the terminal may perform CSI calculation based on CSI processing criteria. The terminal may indicate the number of supported simultaneous CSI calculations, that is, the number of CSI processing units (CPUs) (NCPUs) that may be simultaneously implemented. The terminal may determine the number of CPUs for a corresponding CSI report based on at least one of the number of CPUs for each CSI report, the number of CPUs that are currently occupied, and a configuration of report entry. For example, for configuration information related to a CSI report including a report entry parameter (e.g., reportQuantity) not set to 'none', CPU(s) may be occupied during at least one OFDM symbol, and herein the number of at least one symbol may be determined based on a CSI-RS resource related to sub-configurations or a CSI-IM resource.

In case configuration information (e.g., CSI-ReportConfig) related to a CSI report includes a plurality of sub-configurations, the number of CPUs occupied by the CSI report is determined based on the number of CSI-RS resources corresponding to a sub-configuration. Herein, the number of CSI-RS resources may be determined based on the number of being referred in the configuration information (e.g., CSI-ReportConfig) related to the CSI report or the number of sub-configurations referring to the CSI-RS resource.

After determining CSI, the terminal transmits the CSI report to the base station. The terminal may transmit CSI(s) for at least one sub-configuration according to a report entry parameter (e.g., reportQuantity) configured for the configuration information (e.g., CSI-ReportConfig) related to the CSI report. For example the CSI report may include at least one of PMI, CQI, RI, CRI, SSBRI, LI, and RSRP. Herein, the CSI report may include a part 1 CSI report and a part 2 CSI report. In addition, the CSI report may be transmitted through at least one of PUCCH and PUSCH.

In case the terminal multiplexes the CSI report including the part 2 CSI report, the terminal determines a PUCCH resource and the number of PRBs for the PUCCH resource or the number of part 2 CSI reports under the assumption that each CSI report or each CSI sub-report including in the CSI report indicates a rank 1 or a rank combination {1, 1}. In case a higher layer parameter (e.g., csi-ReportMode) related to a CSI report mode is set to 'Mode2', the terminal determines a PUCCH resource and the number of PRBs for the PUCCH resource or the number of part 2 CSI reports under the assumption that each CSI of the CSI report is related to a resource pair.

In case a CSI report in a PUSCH includes two parts, the terminal may omit some of the part 2 CSI. Omission of the part 2 CSI follows a priority order. In case a corresponding CSI report does not include at least one CSI sub-report including part 2 corresponding to a sub-configuration from a list of sub-configurations provided by a higher layer parameter (e.g., csi-ReportSubConfigList) included in information related to the CSI report but omits part 2 CSI information for a specific priority level, the terminal should exclude every information at the priority level.

For a report configuration related to information related to a CSI report (e.g., CSI-ReportConfig) including a list of sub-configurations, the following processing is possible. For a corresponding CSI report including at least one CSI sub-report, omission of part 2 CSI is performed at a sub-configuration level within a same priority level. Herein, a sub-configuration with an index of a low value has a high priority.

In case a CSI report consists of two parts, the terminal may omit some of part 2 CSI. Omission of part 2 CSI follows a priority order. Regarding a report configuration related to information related to a CSI report (e.g., CSI-ReportConfig) including a list of sub-configurations, for a given CSI report including at least one CSI sub-report, omission of part 2 CSI is defined in Clause 5.2.3. Part 2 CSI is omitted from a lowest priority level up to a part 2 CSI code rate lower than or equal to a code rate set by a higher layer parameter (e.g., maxCodeRate).

In addition, in case a CQI request field in DCI triggers a CSI report(s) in a PUSCH, a first uplink symbol delivering the CSI report(s) does not precede a symbol specified in a predetermined duration after a last symbol of a PDCCH delivering the DCI. This may be understood as an intention to secure a CSI calculation time. Herein, in case a plurality of sub-configurations are configured for the CSI report, a start position of the above-described predetermined duration may be determined based on all sub-configurations that are triggered.

Concrete embodiments of the present disclosure

The present disclosure relates to a technology for reporting CSI by considering a cell DTX/DRX operation in a wireless communication system. Particularly, the present disclosure relates to a technology of controlling a measuring operation and a reporting operation for CSI based on an inactive state of a base station according to cell DTX/DRX, and the present disclosure proposes various embodiments for omitting and/or dropping a CSI report. Hereinafter, in the present disclosure, '/' means 'and', 'or', or 'and/or' according to contexts.

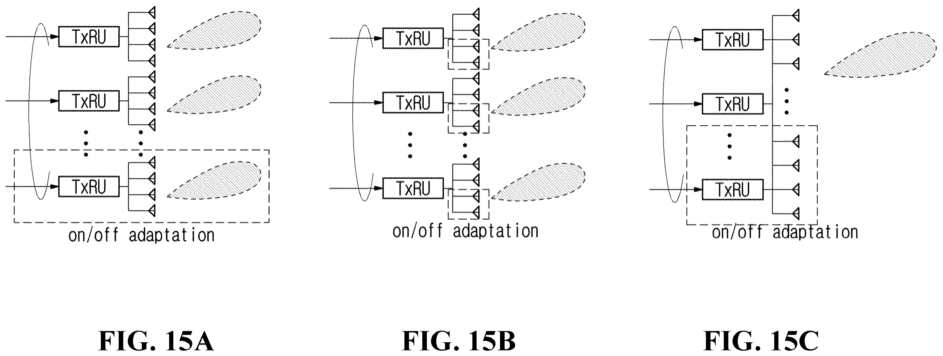

For NES, a base station may operate technologies of controlling UE on/off during a predetermined duration on a time axis, controlling a Tx/Rx resource for a UE-common or UE-specific signal/channel, changing an amount of frequency-axis resource, controlling transmission power, or turning on/off an antenna port (AP) and a TRP in a spatial domain. In the present disclosure, the technologies listed above are referred to as 'NES technology' or 'NES_tech', and a state in which at least one of NES_techs is applied, is referred to as 'NES mode' or 'NES state'. For example, examples of state control of antenna elements according to NES mode are shown in FIG. 15A to FIG. 15C. Referring to FIG. 15A to FIG. 15C, by adaptively turning on/off some antenna elements among a plurality of antenna elements connected with a plurality of transmit radio units (TxRUs), energy saving is possible. Regarding which of NES_techs is applied, a base station may give notice to a terminal according to each NES_tech or NES_tech group [Approach 1] and configure a corresponding NES_tech or NES_tech group(s) beforehand according to each code-point of a specific indicator [Approach 2]. Herein, the specific indicator may be indicated by DCI or MAC CE or be configured by high layer signaling.

In Approach 1, when at least one NES_tech is applied to a terminal, the state may be defined as an NES mode or NES state, and furthermore according to which NES_tech is applied, the state may be handled as a different NES mode or a different NES state. An NES mode or NES state may mean whether or not at least one NES technology is applied or furthermore may be used as a concept further indicating which NES technology(ies) is applied. In case an NES mode or NES state further indicates which NES technology(ies) is applied, different NES modes or different NES states may include a combination of different NES_techs. In Approach 2, as an example, in case a 1-bit indicator is used, '0' may indicate that a corresponding NES_tech is not applied, and '1' may indicate that at least one NES_tech is applied. In this case, when '1' is indicated through a corresponding indicator, a corresponding state may be defined as an NES mode or an NES state. As another example, in case a 2-bit indicator is used, '00' may indicate that at least one NES_tech_A is applied, '10' may indicate that at least one NES_tech_B is applied, and '11' may indicate that at least one NES_tech_C is applied. In this case, when a code-point other than '00' is indicated through a corresponding indicator, a corresponding state may be defined as an NES mode or an NES state. Furthermore, when '01' is identified, a terminal may determine it as NES state#1, when '10' is identified, the terminal may determine it as NES state#2, and when '11' is identified, the terminal may determine it as NES state#3. Accordingly, whether there is an NES state is not and/or which NES state it is may be determined according to each code-point.

For NES, a base station may turn on/off certain spatial elements (e.g., Aps, active Tx/Rx chains, panels or TRPs) or control a power value for a downlink signal/channel. In order to dynamically apply various NES technologies in a spatial domain and a power domain, the base station may associate CSI-RS resources or resource sets having different APs for one CSI report setting (e.g., CSI-ReportConfig) or associate a plurality of power offsets (e.g., powerControlOffset parameter as a power offset value between PDSCH and CRI-RS, powerControlOffsetSS as a power offset value between SSS and CSI-RS, etc.).

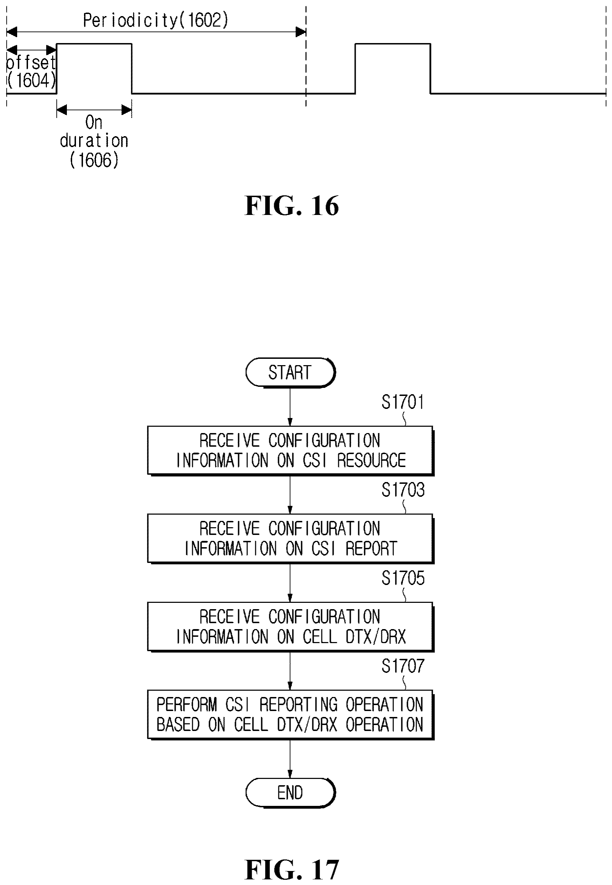

For NES of a base station, cell DTX and/or cell DRX configuration may be set. A periodic cell DTX pattern and/or cell DRX pattern may be configured to be a UE-specific, UE group-common or cell-common scheme. A cell DTX pattern and/or a cell DRX pattern may be configured as shown in FIG. 16. FIG. 16 illustrates an example of a cell DTX pattern and/or a cell DRX pattern according to an embodiment of the present disclosure. Referring to FIG. 16, at least one of periodicity 2002, start slot/offset 2004, and on duration 2006 may be included.

A terminal may acquire at least one cell DTX and/or cell DRX configuration for a serving cell. Specifically, through L1/L2 (e.g., UE-specific DCI, UE group-common DCI, or MAC-CE) signaling, activation/deactivation may be indicated for at least one cell DTX and/or cell DRX configuration.

During an inactive period of cell DTX, at least one downlink signal/channel, which is assumed not to be transmitted from a base station, may be defined or set beforehand. In addition, during the inactive period of cell DTX, at least one uplink signal/channel, which may not be transmitted from a terminal to the base station, may be defined or set beforehand.

Hereinafter, Table 5 to Table 9 are Rel-18 NES-related contents to be incorporated into the TS 38.214 document.

[Table 5]

**5.2.1.1 Reporting settings**

Each Reporting Setting *CSI-ReportConfig* is associated with a single downlink BWP (indicated by higher layer parameter *BWP-Id*) given in the associated *CSI-Resource-Config* for channel measurement and contains the parameter(s) for one CSI reporting band: codebook configuration including codebook subset restriction, time-domain behavior, frequency granularity for CQI and PMI, measurement restriction configurations, and the CSI-related quantities to be reported by the UE such as the layer indicator (LI), L1-RSRP, L1-SINR, CRI, and SSBRI (SSB Resource Indicator) and CapabilityIndex.

The time domain behavior of the *CSI-ReportConfig* is indicated by the higher layer parameter *reportConfigType* and can be set to 'aperiodic', 'semiPersistentOnPUCCH', 'semiPersistentOnPUSCH', or 'periodic'. For 'periodic' and 'semiPersistentOnPUCCH'/'semiPersistentOnPUSCH' CSI reporting, the configured periodicity and slot offset applies in the numerology of the UL BWP in which the CSI report is configured to be transmitted on. The higher layer parameter *reportQuantity* indicates the CSI-related, L1-RSRP-related, L1-SINR-related or CapabilityIndex-related quantities to report. The *reportFreqConfiguration* indicates the reporting granularity in the frequency domain, including the CSI reporting band and if PMI/CQI reporting is wideband or sub-band. The *timeRestrictionForChannelMeasurements* parameter in *CSI-ReportConfig* can be configured to enable time domain restriction for channel measurements and *timeRestrictionForInterferenceMeasurements* can be configured to enable time domain restriction for interference measurements. The *CSI-ReportConfig* can also contain *CodebookConfig*, which contains configuration parameters for Type-I, Type II, Enhanced Type II CSI, or Further Enhanced Type II Port Selection including codebook subset restriction when applicable, and configurations of group-based reporting. A UE is not expected to be configured with a CSI report setting associated with a dormant DL BWP if the *reportConfigType* is set to 'aperiodic'. **A *CSI-ReportConfig* can contain a list of sub-configurations, provided by the higher layer parameter [*csi-ReportSubConfigList*], where each sub-configuration is identified by [*csi-ReportSubConfigID*)] and corresponds to a list of one or more CSI-RS resources or corresponds to a CSI-RS antenna port subset, and/or corresponds to a power offset for PDSCH relative to CSI-RS. A UE is not expected to be configured with a *CSI-ReportConfig* that contains a mix of sub-configuration(s) each corresponding to a list of one or more CSI-RS resources and some other sub-configuration(s) each corresponding to CSI-RS antenna port subset.**

[Table 6]

5.2.1.4.1 Resource Setting configuration

...

**A subset of resources, where a subset contains one or more resources, of a NZP-CSI-RS Resource Set for channel measurement corresponds to a sub-configuration contained in a *CSI-ReportConfig* if each of the sub-configuration(s) contains a list of one or more NZP-CSI-RS resources, or all the resources of a NZP-CSI-RS Resource Set for channel measurement correspond to each of the sub-configuration(s) contained in a *CSI-ReportConfig* if each of the sub-configurations does not contain a list of NZP-CSI-RS resources, as described in Clause 5.2.1.4.2.**

Except for L1-SINR, if interference measurement is performed on NZP-CSI-RS, a UE does not expect to be configured with more than one NZP-CSI-RS resource in the associated resource set within the resource setting for channel measurement. Except for L1-SINR, the UE configured with the higher layer parameter *nzp-CSI-RS-Resources-ForInterference* may expect no more than 18 NZP-CSI-RS ports configured in a NZP-CSI-RS resource set.

For CSI measurement(s) other than L1-SINR, a UE assumes:

- each NZP-CSI-RS port configured for interference measurement corresponds to an interference transmission layer.

- all interference transmission layers on NZP-CSI-RS ports for interference measurement take into account the associated EPRE ratios configured in 5.2.2.3.1;

- other interference signal on REs of NZP-CSI-RS resource for channel measurement, NZP-CSI-RS resource for interference measurement, or CSI-IM resource for interference measurement.

For L1-SINR measurement with dedicated interference measurement resources, a UE assumes:

- the total received power on dedicated NZP-CSI-RS resource for interference measurement or dedicated CSI-IM resource for interference measurement corresponds to interference and noise.

[Table 7]

5.2.1.4.2 Report Quantity Configurations

...

**If the UE is configured with a *CSI-ReportConfig* that contains a list of sub-configurations, provided by the higher layer parameter [*csi-ReportSubConfigList*]:**

**- the UE expects to be configured with the higher layer parameter *codebookType* set to 'type1-SinglePanel' or 'type1-MultiPanel'. If the UE indicates a capability for supporting mixed codebook combination in a slot with [ABC], each sub-configuration can be configured with the higher layer parameter *codebookType* set to 'type1-SinglePanel' or 'type1-MultiPanel'. - Each sub-configuration can be configured with an antenna port subset using the higher layer bitmap parameter [*port-subsetIndicator*] which contains the bit sequence $p_0,p_1,...,p_{Pm-1}$, where $p_0$ is the MSB and $p_{Pm-1}$ is the LSB, bit $p_i$ corresponds to antenna port 3000 + i, and Pm is the number of ports *nrofPorts* configured for the CSI-RS resources(s) within the NZP-CSI-RS-ResourceSet contained in the *CSI-ResourceConfig* for channel measurement that corresponds to the *CSI-ReportConfig*. A bit value 0 in [*port-subsetIndicator*] indicates that the corresponding antenna port is disabled for the sub-configuration, whereas bit value 1 indicates that the antenna port is enabled and belongs to the antenna port subset for the sub-configuration.**

**- If a sub-configuration is configured with an antenna port subset, then the sub-configuration can be configured with a [RI restriction parameter] and, if the number of antenna ports of the subset greater than 2, with [n1-n2 parameter] if the higher layer parameter *codebookType* is set to 'type1-SinglePanel' or with [ng-n1-n2 parameter] if the higher layer parameter *codebookType* is set to 'type1-MultiPanel', and, if the corresponding number of antenna ports of the subset is 2. with *twoTX-CodebookSubsetRestriction*, where the parameters [R1 restriction], [n1-n2], [ng-n1-n2], *twoTX-CodebookSubsetRestriction* are as described in Clauses 5.2.2.2.1 and 5.2.2.2.2.**

**- A sub-configuration can be configured with a list of NZP-CSI-RS resources, provided by [*nzp-CSI-RS-resourceList*], which indicates one or more NZP-CSI-RS resources, within the *NZP-CSI-RS-ResourceSet* contained in the *CSI-ResourceConfig* for channel measurement which corresponds to the *CSI-ReportConfig* [The list of NZP-CSI-RS resources is identical to or has no intersection with a list of NZP-CSI-RS resources configured for any other sub-configuration(s) within the *CSI-ReportConfig*.]**

**- A sub-configuration can be configured with a power offset provided by [*powerOffset*].**

(continued)

> **- If a sub-configurations is not configured with [*nzp-CSI-RS-resourceList*] then the sub-configuration shall be associated with all the NZP-CSI-RS resources within the NZP-CSI-RS-ResourceSet contained in the *CSI-ResourceConfig* for channel measurement which corresponds to the *CSI-ReportConfig*
> **- the UE reports CSI(s) for one or more sub-configurations according to Clauses 5.2.1.5.1. 5.2.1.5.2. 5.2.3 and 5.2.4. and according to the higher layer parameter *reportQuantity* configured for that *CSI-ReportConfig.***
>
> If the UE is configured with a *CSI-ReportConfig* with the higher layer parameter *reportQuantity* set to 'ssb-Index-RSRP' or 'ssb-Index-RSRP- Index', the UE shall report SSBRI, where SSBRI $k$ ($k \geq 0$) corresponds to the configured ($k$+1)-th entry of the associated *csi-SSR-Resourcefist* in the corresponding *CSI-SSB-ResourceSet.*

[Table 8]

> 5.2.1.5 Triggering/activation of CSI Reports and CSI-RS
>
> 5.2.1.5.1 Aperiodic CSI Reporting/Aperiodic CSI-RS when the triggering PDCCH and the CSI-RS have the same numerology
>
> For CSI-RS resource sets associated with Resource Settings configured with the higher layer parameter *resourceType* set to 'aperiodic', 'periodic', or 'semi-persistent', trigger states for Reporting Setting(s) (configured with the higher layer parameter *reportConfigType* set to 'aperiodic') and/or Resource Setting for channel and/or interference measurement on one or more component carriers are configured using the higher layer parameter *CSI-Aperiodic-TriggerStateList*. **For a reporting setting for which the *CSI-ReportConfig* contains a list of sub-configurations provided by the higher layer parameter [*csi-ReportSubConfigList*], one or more trigger states can be configured with each indicating one or more of the sub-configurations.** For aperiodic CSI report triggering, a single set of CSI triggering states are higher layer configured, wherein the CSI triggering states can be associated with any candidate DL BWP. A UE is not expected to receive more than one DCI with non-zero *CSI request* field per slot per cell. A UE is not expected to receive DCI with non-zero *CSI request* field within a cell group in a slot overlapping with any slot receiving DCI with non-zero *CSI request* field in the same cell group. A UE is not expected to be configured with different *TCI-StateId*'s for the same aperiodic CSI-RS resource ID configured in multiple aperiodic CSI-RS resource sets with the same triggering offset in the same aperiodic trigger state. A UE is not expected to receive more than one aperiodic CSI report request for transmission in a given slot per cell. A UE is not expected to receive an aperiodic CSI report request for transmission in a slot overlapping with any slot having an aperiodic CSI report transmission in the same cell group. If a UE does not indicate its capability of *CSItriggerStateContainingNonactiveBWP* the UE is not expected to be triggered with a CSI report for a non-active DL BWP. Otherwise, when a UE is triggered with a CSI report for a DL BWP that is non-active when expecting to receive the most recent occasion, no later than the CSI reference resource, of the associated NZP-CSI-RS, the UF is not expected to report the CSI for the non-active DL BWP and the CSI report associated with that BWP is omitted. When a UE is triggered with aperiodic NZP-CSI-RS in a DL BWP that is non-active when expecting to receive the NZP-CSI-RS, the UE is not expected to measure the aperiodic CSI-RS. In the carrier of the serving cell expecting to receive that associated NZP-CSI-RS, if the active DL BWP when receiving the NZP-CSI-RS is different from the active DL BWP when receiving the triggering DCI,
>
> - the last symbol of the PDCCH span of the DCI carrying the BWP switching shall be no later than the last symbol of the PDCCII span of the DCI carrying the CSI trigger, irrespective of whether they are in the same carrier of a serving cell or not and irrespective of whether they are in the same SCS or not;
>
> - the UE is not expected to have any other BWP switching in that carrier after the last symbol of the PDCCH span covering the DCI carrying the CSI trigger and before the first symbol of the triggered NZP-CSI-RS or CSI-IM.
>
> - when the PDCCH reception includes two PDCCH candidates from two respective search space sets, as described in clause 10.1 of [6, TS 38.213], the span that involves the PDCCH candidate that ends later in time is used.

[Table 9]

> 5.2.1.5.2 Semi-persistent CSI/Semi-persistent CSI-RS

(continued)

For semi-persistent reporting on PUSCH, a set of trigger states are higher layer configured by *CSI-SemiPersistentOnPUSCH-TriggerStateList,* where the CSI request field in DCI scrambled with SP-CSI-RNTI activates one of the trigger states **For a reporting setting for which the *CSI-ReportConfig* contains a list of sub-configurations, provided by the higher layer parameter [*csi-ReportSubConfigList*], one or more trigger states can be configured with each indicating one or more of the sub-configurations.** A UE is not expected to receive a DCI scrambled with SP-CSI-RNTI activating one semi-persistent CSI report with the same *CSI-ReportConfigId* as in a semi-persistent CSI report which is activated by a previously received DCI scrambled with SP-CSI-RNTI.

For semi-persistent reporting on PUCCH, the PUCCH resource used for transmitting the CSI report are configured by *reportConfigType.* Semi-persistent reporting on PUCCH is activated by an activation command as described in clause 6.1.3.16 of [10, TS 38.321], which selects one of the semi-persistent Reporting Settings for use by the UE on the PUCCH. **For a selected reporting setting for which the *CSI-ReportConfig* contains a list of sub-configurations provided by the higher layer parameter [*csi-ReportSubConfigList*], [an/the[ activation command can [also] select one or more sub-configurations to use by the UE as described in clause 6.1.3.X of [10, TS 38.321].** When the UE would transmit a PUCCH with HARQ-ACK information in slot n corresponding to the PDSCH carrying the activation command, the indicated semi-persistent Reporting Setting should be applied starting from the first slot that is after slot $n + 3N_{slot}^{subframe,\mu}$ where $\mu$ is the SCS configuration for the PUCCH.

As shown in Table 5 to Table 9 above, at least one sub-configuration may be set in a configuration related to one CSI report (hereinafter 'CSI report configuration'). In each sub-configuration, one of the entries below or a combination thereof may be configured.

    1) ID list of one or more CSI-RS resources

    2) Antenna port subset indication configured as a bitmap

    3) Additional power offset delta for EPRE offset between PDSCH and CSI-RS, which is set in a CSI-RS resource configuration

For convenience of explanation, in the present disclosure, a CSI report configuration including a sub-configuration configured as an ID list of one or more CSI-RS resources is referred to as type 2 spatial domain (SD) adaptation, a CSI report configuration including a sub-configuration configured as antenna port subset indication configured as a bitmap is referred to as type 1 SD adaptation, and a CSI report configuration including a sub-configuration configured as an additional power offset delta value is referred as power domain (PD) adaptation. For sub-configurations belonging to one CSI report configuration, an ID list of at least one CSI-RS resource and/or a power offset delta value may be configured, and this case is referred to as type 2 SD + PD adaptation. Antenna port subset indication configured as a bitmap and/or a power offset delta value may be configured for a sub-configuration belonging to one CSI report configuration, and this case is referred to as type 1 SD + PD adaptation.

In the case of type 1 SD or PD or type 1 SD + PD adaptation, each CSI-RS resource may interwork with each of all sub-configurations in one CSI report configuration. In the case of type 2 SD, each CSI-RS resource may interwork only with a single sub-configuration among a plurality of sub-configurations in one CSI report configuration. In the case of type 2 SD + PD adaptation, in a same CSI report configuration, a list#1 of CSI-RS resources configured in one sub-configuration and a list#2 of CSI-RS resources configured in another sub-configuration may be identical with each other or disjoint from each other.

Meanwhile, in case L sub-configurations are configured within one CSI report configuration, a terminal may transmit CSIs corresponding to the L sub-configurations respectively to a base station through one PUSCH/PUCCH. Through MAC-CE or DCI, among the L sub-configurations, only N (e.g., a value equal to or greater than 1 and equal to or smaller than L) sub-configurations may be activated or triggered, and in this case, CSI(s) corresponding to the N sub-configurations respectively may be transmitted to the base station through one PUSCH/PUCCH. Specifically, for a CSI report configuration where semi-persistent (SP) CSI reporting on PUCCH is set, N sub-configurations among L sub-configurations, which are configured through MAC-CE, may be activated, and for a CSI report configuration where SP CSI reporting on PUSCH or aperiodic CSI reporting is set, N sub-configurations among L sub-configurations, which are configured through DCI, may be triggered.

The present disclosure proposes a technology for an operation of receiving a configured CSI-RS for CSI reporting during a cell DTX/DRX-inactive duration of a specific serving cell and an associated CSI reporting operation. Specifically, CSI report configurations supported in NR are classified mainly into periodic-CSI (P-CSI) reporting, semi-persistent CSI (SP-CSI) reporting, and aperiodic CSI (A-CSI) reporting, and the present disclosure proposes embodiments for a CSI-RS receiving operation and an associated CSI reporting operation for each of the reporting schemes. Additionally, the present disclosure also proposes embodiments for CSI reporting for a CSI report configuration including at least one sub-configuration, irrespective of a cell DTX/DRX setting of a specific serving cell.

FIG. 17 illustrates an example of a procedure of performing CSI reporting according to an embodiment of the present disclosure. FIG. 17 exemplifies a method performed by a terminal.

Referring to FIG. 17, at step S1701, the terminal receives configuration information for a CSI resource. In other words, the terminal receives information related to a resource that is configured for CSI-RS. For example, the configuration information for the CSI resource may include identification information of a resource configuration (e.g., ID), a list of resources, a related BWP, and a type of resource (e.g., periodic, aperiodic, or semi-persistent). Herein, the list of resources indicates a resource(s) related to at least one of NZP-CSI-RS, SSB and CSI-IM and may include, for example, at least one of power-related information, scrambling-related information, period and offset-related information, and resource mapping-related information (e.g., a frequency resource, a time resource, a port, etc.).

At step S1703, the terminal receives configuration information for CSI report. The configuration information may include information related to a CSI report-related CSI-RS resource or resource set, a cell/carrier providing a CSI-RS, a report type (e.g., periodic, aperiodic, or semi-persistent), a report entry, a report format (e.g., wideband and/or sub-band), and a codebook setting. In addition, the configuration information is information for setting a plurality of sub-configurations and may include at least one of information indicating an AP subset (e.g., bitmap), information indicating at least one CSI-RS resource (e.g., ID list of CSI-RS resource(s)), and information indicating a power offset value (e.g., offset value). Accordingly, sub-configurations may be related to at least one of different numbers of APs, different CSI-RS resources, AP subsets, and power offset values. Herein, according to embodiments of the present disclosure, configuration information for CSI report may indicate a CSI reporting operation through an uplink channel of a second cell and the use of a CSI-RS in a first cell for measurement.

At step S1705, the terminal receives configuration information for cell DTX/DRX. For example, the terminal receives configuration information related to a cell DTX and/or DRX operation of the first cell from a base station. The configuration information for cell DTX/DRX may include information related to a cycle of DTX/DRX, an offset, on-duration, a type (e.g., DTX, DRX or DTXDRX), and an active state. Accordingly, the terminal may identify a signal(s) not transmitted and/or received according to a cell DTX/DRX operation during a designated period.

At step S1707, the terminal performs a CSI reporting operation based on the cell DTX/DRX operation. Herein, according to an embodiment, the terminal performs a CSI reporting operation on the second cell based on a cell DTX/DRX operation of the first cell. In other words, when transmitting a CSI report through an uplink channel (or PUCCH or PUSCH) of the second cell, the terminal may determine whether or not CSI measurement and/or reporting is performed by considering an active period and/or a non-active period according to cell DTX/DRX of the first cell providing a CSI-RS and perform CSI measurement and/or reporting according to the determination. Herein, according to an embodiment, on a given CSI report occasion, the terminal may omit or drop a CSI report based on a predefined or preset rule.

As shown in the embodiment described with reference to FIG. 17, CSI reporting may be configured to be performed in a second cell by using a CSI-RS that is provided in a first cell. In this case, when the first cell performs a cell DTX/DRX operation, a terminal may control CSI measurement and/or reporting in the second cell based on the cell DTX/DRX operation of the first cell. The controlling of the CSI measurement and/or reporting in the second cell may include at least one of not performing the CSI measurement and/or reporting and transmitting a CSI report with a predefined or preset value. Hereinafter, the present disclosure will describe various embodiments related to control of CSI measurement and/or reporting.

[Embodiment#1] An operation of receiving a periodic (P)-CSI-RS configured for P-CSI reporting during a non-active duration of cell DTX and/or cell DRX of a serving cell and an associated CSI reporting operation.

A CSI-RS for P-CSI report may be connected with a P-CSI-RS. A configuration for P-CSI report may be set through RRC signaling, and a message for RRC signaling may include a cycle of PUCCH delivering a P-CSI report and offset information. For example, based on a P-CSI report configuration, a terminal, which receives a P-CSI-RS transmitted on cell#1 (e.g., SCell), may transmit CSI measured through the P-CSI-RS through a PUCCH in cell#2 (e.g., PCell).

Cell DTX and/cell DRX may be set/activated for cell#1, which provides a P-CSI-RS, and may be defined or set not to receive a P-CSI-RS during a non-active duration of cell DTX and/or cell DRX. That is, due to a non-active duration of cell#1, transmission of a P-CSI-RS may be suspended. In this case, a terminal may be required not to perform P-CSI reporting associated with the P-CSI-RS. In other words, during a non-active duration of cell DTX and/or cell DRX configured for cell#1, if a terminal does not receive a P-CSI-RS according to a predetermined rule or setting, the terminal may not transmit a PUCCH in cell#2 for a P-CSI report corresponding to the P-CSI-RS.

Alternatively, irrespective of a P-CSI-RS receiving operation during a non-active duration of cell DTX and/cell DRX configured in cell#1, a terminal may not transmit a PUCCH in cell#2 for a P-CSI report related to a P-CSI-RS in cell#1 during the non-active duration of cell DTX and/cell DRX that is configured in cell#1.

[Embodiment#2] An operation of receiving a CSI-RS for AP-CSI reporting during a non-active duration of cell DTX and/or cell DRX of a serving cell and an associated CSI reporting operation.

As a CSI-RS for AP-CSI reporting, a P-CSI-RS, a semi-persistent (SP)-CSI-RS or an AP-CSI-RS may be connected. In addition, a trigger for AP-CSI reporting may be indicated through a UL grant. To this end, each code-point of a CSI request field in the UL grant may be connected with at least one CSI report configuration index by a pre-configuration, and an AP-CSI report associated with a code-point indicated in the CSI request field in the UL grant may be triggered. A terminal measures CSI for the triggered AP-CSI report and loads the measured CSI information in a PUSCH that is scheduled by a corresponding UL grant.

Herein, CSI-RSs connected with a plurality of CSI report configurations corresponding to one code-point may be transmitted through at least one or more cells, and some of the cells may be in a state where cell DTX and/or cell DRX is configured. For example, in case CSI report configurations corresponding to one code-point are configured to be connected with cell#1/2/3, cell#2 may be a non-active duration of cell DTX and/or cell DRX, and in this case, a terminal may not receive a CSI-RS according to a predetermined rule or setting. That is, due to the non-active duration of cell#2, transmission of the CSI-RS in cell#2 may be suspended. If a corresponding code-point (e.g., a code-point corresponding to a CSI report connected with cell#2) is indicated in a CSI request field in a UL grant received by a terminal, the terminal may omit a CSI report corresponding to cell#2 or generate a CSI report to include specific default information and give feedback to a base station. Alternatively, the terminal may not expect that a code-point corresponding to cell#2 will be indicated in a CSI request field of a UL grant. In other words, the terminal may expect that a code-point corresponding to cell#2 will not be indicated in a CSI request field of a UL grant.

In other words, during a non-active duration of cell DTX and/or cell DRX that is set to a cell, if a terminal does not receive a CSI-RS according to a predetermined rule or setting and an AP-CSI report corresponding to the CSI-RS is triggered, the terminal may not perform CSI measurement through the CSI-RS. As the CSI measurement is not performed, the terminal may omit a CSI report corresponding to the cell or give a CSI report including specific default information to a base station as feedback. Alternatively, during a non-active duration of cell DTX and/or cell DRX that is set to a cell, if a terminal does not receive a CSI-RS according to a predetermined rule or setting, the terminal may expect that an AP-CSI report corresponding to the CSI-RS will not be triggered. That is, during a non-active duration of cell DTX and/or cell DRX that is set to a cell, if a terminal does not receive a CSI-RS according to a predetermined rule or setting, the terminal may not expect that an AP-CSI report corresponding to the CSI-RS will be triggered.

Alternatively, irrespective of an operation of receiving a P-CSI-RS during a non-active duration of cell DTX and/or cell DRX configured in a corresponding cell, if an AP-CSI report corresponding to a CSI-RS transmitted from the cell is triggered during the non-active duration of cell DTX and/or cell DRX configured in the cell, a terminal may not perform CSI measurement through the CSI-RS. As the CSI measurement is not performed, the terminal may omit a CSI report corresponding to the cell or configure the CSI report with specific default information and give CSI information to a base station as feedback. Alternatively, the terminal may expect that the AP-CSI report corresponding to the CSI-RS transmitted from the cell will not be triggered. In other words, the terminal may not expect that the AP-CSI report corresponding to the CSI-RS transmitted from the cell will be triggered.

[Embodiment#3] An operation of receiving a CSI-RS for SP-CSI reporting during a non-active duration of cell DTX and/or cell DRX of a serving cell and an associated CSI reporting operation.

A CSI-RS for SP-CSI reporting may be connected with a P-CSI-RS or an SP-CSI-RS. In addition, activation for SP-CSI reporting may be indicated through DCI for On-PUSCH SP-CSI reporting or through MAC CE for On-PUCCH SP-CSI reporting. That is, activation of one CSI report configuration may be indicated through DCI that is scrambled with SP-CSI-RNTI, and activation of at least one CSI report configuration of a BWP of a cell may be indicated through MAC CE. A terminal may measure CSI for the activated SP-CSI reporting and transmit measured CSI information through a PUSCH or PUCCH resource that is preset or is indicated through DCI or MAC CE.

Herein, a cell providing a CSI-RS for performing SP-CSI reporting may be in a state where cell DTX and/or cell DRX is configured. In this case, a terminal may deem that SP-CSI reporting associated with the CSI-RS is deactivated. In other words, during a non-active duration of cell DTX and/or cell DRX configured in cell#1, if a terminal does not receive a CSI-RS according to a predetermined rule or setting, the terminal may deem that SP-CSI reporting corresponding to the CSI-RS is activated and may not transmit a PUCCH or PUSCH in cell#2 for SP-CSI reporting.

Alternatively, irrespective of a CSI-RS receiving operation during a non-active duration of cell DTX and/cell DRX configured in cell#1, during the non-active duration of cell DTX and/cell DRX that is configured in cell#1, a terminal may deem that SP-CSI reporting related to a CSI-RS in cell#1 is deactivated and may not transmit a PUCCH or PUSCH in cell#2 for SP-CSI reporting related to the CSI-RS in cell#1.

Herein, the terminal may handle the SP-CSI reporting, which is deemed to be deactivated, as follows. Alt 1) The terminal may deem that the SP-CSI reporting is automatically activated during an upcoming on-duration of cell DTX and/or cell DRX without separate activation. Alt 2) When there is no additional activation, the terminal may determine that the non-active state is maintained during an upcoming on-duration of cell DTX and/or cell DRX. That is, according to Alt 2, SP-CSI reporting, which is deactivated by cell DTX and/or cell DRX, may be activated by separate activation signaling. Herein, which of Alt 1 and Alt 2 is to be applied may be set by RRC signaling of a base station. That is, the terminal may receive configuration information related to activation of the deactivated SP-CSI reporting based on cell DTX/DRX and determine a state of SP-CSI reporting according to a scheme indicated by the configuration information (e.g., Alt 1 or Alt 2).

[Embodiment#4] A CSI reporting operation corresponding to a CSI report configuration with at least one sub-configuration being configured.

This embodiment relates to dropping or omitting a CSI report. The CSI report may be dropped or omitted based on a defined condition.

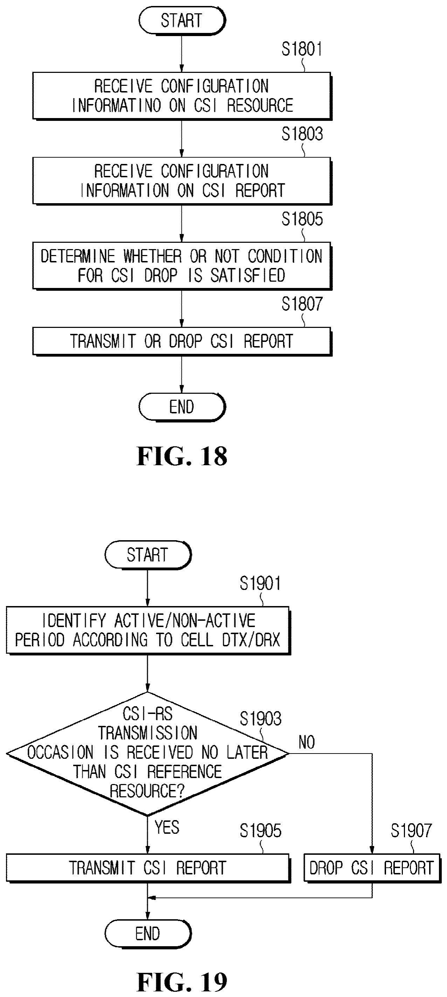

FIG. 18 illustrates an example of a procedure of transmitting or dropping a CSI report according to an embodiment of the present disclosure. FIG. 18 exemplifies a method performed by a terminal.

Referring to FIG. 18, at step S1801, the terminal receives configuration information for a CSI resource. In other words, the terminal receives information related to a resource that is configured for a CSI-RS. For example, the configuration information for the CSI resource may include identification information of a resource configuration (e.g., ID), a list of resources, a related BWP, and a type of resource (e.g., periodic, aperiodic, or semi-persistent). Herein, the list of resources indicates a resource(s) related to at least one of NZP-CSI-RS, SSB and CSI-IM and may include, for example, at least one of power-related information, scrambling-related information, period and offset-related information, and resource mapping-related information (e.g., a frequency resource, a time resource, a port, etc.).

At step S1803, the terminal receives configuration information for CSI report. The configuration information may include information related to a CSI report-related CSI-RS resource or resource set, a cell/carrier providing a CSI-RS, a report type (e.g., periodic, aperiodic, or semi-persistent), a report entry, a report format (e.g., wideband and/or sub-band), and a codebook setting. In addition, the configuration information is information for setting a plurality of sub-configurations and may include at least one of information indicating an AP subset (e.g., bitmap), information indicating at least one CSI-RS resource (e.g., ID list of CSI-RS resource(s)), and information indicating a power offset value (e.g., offset value). Accordingly, sub-configurations may be related to at least one of different numbers of APs, different CSI-RS resources, AP subsets, and power offset values.

At step S1805, the terminal determines whether or not a condition for CSI drop is satisfied. The terminal may determine CSI based on the configuration information received at step S1801 and step S1803 and transmit the CSI. Herein, based on a predefined or preset rule, a CSI report may be dropped. Accordingly, when an occasion occurs for measurement for a RS for calculating the CSI and/or for transmission of the CSI report, the terminal may evaluate a condition for dropping CSI calculation and/or transmission.

At step S1807, the terminal may transmit or drop the CSI report. When dropping the CSI report, the terminal may not generate the CSI report or not perform CSI measurement. Furthermore, when dropping the CSI report, the terminal may transmit a different signal or not use an uplink resource.

As shown in the embodiment described with reference to FIG. 18, a terminal may determine according to a rule whether or not a condition is satisfied and may drop a CSI report, that is, not transmit the CSI report according to a result of the determination. A rule related to dropping of a CSI report may be defined based on at least one of a state of a resource allocated for the CSI report or a higher resource including the resource and a state of an associated CSI-RS. Hereinafter, the present disclosure will describe a rule related to dropping and/or omitting of a CSI report.

Hereinafter, Table 10 and Table 11 are descriptions about A-CSI reporting and AP-CSI-RS, which are excerpted from standard documents. Referring to Table 10 and Table 11, conditions for dropping or omitting a CSI report are shown.

[Table 10]

| |
|---|
| 5.2.1.5.1 Aperiodic CSI Reporting/AP-CSI-RS when the triggering PDCCH and the CSI-RS have the same numerology |

(continued)

For CSI-RS resource sets associated with Resource Settings configured with the higher layer parameter *resource-Type* set to 'aperiodic', 'periodic', or 'semi-persistent', trigger states for Reporting Setting(s) (configured with the higher layer parameter *reportConfigType* set to 'aperiodic') and/or Resource Setting for channel and/or interference measurement on one or more component carriers are configured using the higher layer parameter *CSI-Aperiodic-TriggerStateList*. For aperiodic CSI report triggering, a single set of CSI triggering states are higher layer configured, wherein the CSI triggering states can be associated with any candidate DL BWP. A UE is not expected to receive more than one DCI with non-zero *CSI request* field per slot per cell. A UE is not expected to receive DCI with non-zero *CSI request* field within a cell group in a slot overlapping with any slot receiving DCI with non-zero *CSI request* field in the same cell group. A UE is not expected to be configured with different *TCI-StateId*'s for the same aP-CSI-RS resource ID configured in multiple aP-CSI-RS resource sets with the same triggering offset in the same aperiodic trigger state. A UE is not expected to receive more than one aperiodic CSI report request for transmission in a given slot per cell. A UE is not expected to receive an aperiodic CSI report request for transmission in a slot overlapping with any slot having an aperiodic CSI report transmission in the same cell group. If a UE does not indicate its capability of *CSItriggerStateContainingNonactiveBWP* the UE is not expected to be triggered with a CSI report for a non-active DL BWP. Otherwise, **when a UE is triggered with a CSI report for a DL BWP that is non-active when expecting to receive the most recent occasion, no later than the CSI reference resource, of the associated NZP-CSI-RS, the UE is not expected to report the CSI for the non-active DL BWP and the CSI report associated with that BWP is omitted. When a UE is triggered with aperiodic NZP-CSI-RS in a DL BWP that is non-active when expecting to receive the NZP-CSI-RS, the UE is not expected to measure the AP-CSI-RS**. In the carrier of the serving cell expecting to receive that associated NZP-CSI-RS, if the active DL BWP when receiving the NZP-CSI-RS is different from the active DL BWP when receiving the triggering DCI,

- the last symbol of the PDCCH span of the DCI carrying the BWP switching shall be no later than the last symbol of the PDCCH span of the DCI carrying the CSI trigger, irrespective of whether they are in the same carrier of a serving cell or not and irrespective of whether they are in the same SCS or not;
- the UE is not expected to have any other BWP switching in that carrier after the last symbol of the PDCCH span covering the DCI carrying the CSI trigger and before the first symbol of the triggered NZP-CSI-RS or CSI-IM.
- when the PDCCH reception includes two PDCCH candidates from two respective search space sets, as described in clause 10.1 of [6, TS 38.213], the span that involves the PDCCH candidate that ends later in time is used.

Referring to Table 10, as a condition#1, when a CSI report connected with a CSI-RS transmitted in a non-active BWP is triggered through DCI, the CSI report may be omitted.

[Table 11]

5.2.2.5 CSI reference resource definition

The CSI reference resource for a serving cell is defined as follows:

- In the frequency domain, the CSI reference resource is defined by the group of downlink physical resource blocks corresponding to the band to which the derived CSI relates.
- In the time domain, the CSI reference resource for a CSI reporting in uplink slot $n'$ is defined by a single downlink slot $n - n_{CSI\_ref} - K_{offset} \cdot \frac{2^{\mu_{DL}}}{2^{\mu_{K_{offset}}}}$, where $K_{offset}$ is a parameter configured by higher layer as specified in clause 4.2 of [6 TS 38.213], and where $\mu_{K_{offset}}$ is the subcarrier spacing configuration for $K_{offset}$ with a value of 0 for frequency range 1,

- where $n = \left\lfloor n' \cdot \frac{2^{\mu_{DL}}}{2^{\mu_{UL}}} \right\rfloor + \left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor$ and $\mu_{DL}$ and $\mu_{UL}$ are the subcarrier spacing configurations for DL and UL, respectively, and $N_{slot,\,offset}^{CA}$ and $\mu_{offset}$ are determined by higher-layer configured ca-SlotOffset for the cells transmitting the uplink and downlink, as defined in clause 4.5 of [4, TS 38.211]

- where for periodic and semi-persistent CSI reporting

- if a single CSI-RS/SSB resource is configured for channel measurement $n_{CSI\,ref}$ is the smallest value greater than or equal to $4 \cdot 2^{\mu_{DL}}$, such that it corresponds to a valid downlink slot, or

(continued)

- if multiple CSI-RS/SSB resources are configured for channel measurement $n_{CSI\_ref}$ is the smallest value greater than or equal to $5 \cdot 2^{\mu DL}$, such that it corresponds to a valid downlink slot.

- where for aperiodic CSI reporting, if the UE is indicated by the DCI to report CSI in the same slot as the CSI request. $n_{CSI\_ref}$ is such that the reference resource is in the same valid downlink slot as the corresponding CSI request, otherwise $n_{CSI\_ref}$ is the smallest value greater than or equal to $\left\lfloor Z' / N_{symb}^{slot} \right\rfloor$, such that slot $n$- $n_{CSI\,ref}$ corresponds to a valid downlink slot, where Z' corresponds to the delay requirement as defined in Clause 5.4.

- when periodic or semi-persistent CSI-RS/CSI-IM or SSB is used for channel/interference measurements, the UE is not expected to measure channel/interference on the CSI-RS/CSI-IM/SSB whose last OFDM symbol is received up to Z' symbols before transmission time of the first OFDM symbol of the aperiodic CSI reporting.

A slot in a serving cell shall be considered to be a valid downlink slot if:
- it comprises at least one higher layer configured downlink or flexible symbol, and
- it does not fall within a configured measurement gap for that UE

**If there is no valid downlink slot for the CSI reference resource corresponding to a CSI Report Setting in a serving cell. CSI reporting is omitted for the serving cell in uplink slot *n'*. After the CSI report (re)configuration, serving cell activation. BWP change, or activation of SP-CSI, the UE reports a CSI report only after receiving at least one CSI-RS transmission occasion for channel measurement and CSI-RS and/or CSI-IM occasion for interference measurement no later than CSI reference resource and drops the report otherwise. When DRX is configured, the UE reports a CSI report only if receiving at least one CSI-RS transmission occasion for channel measurement and CSI-RS and/or CSI-IM occasion for interference measurement in DRX Active Time no later than CSI reference resource and drops the report otherwise. When DRX is configured and the CSI-RS Resource Set for channel measurement corresponding to a CSI report is configured with two Resource Groups and N Resource Pairs, as described in clause 5.2.1.4.1, the UE reports a CSI report only if receiving at least one CSI-RS transmission occasion for each CSI-RS resource in a Resource Pair within the same DRX Active Time no later than CSI reference resource and drops the report otherwise. When the UE is configured to monitor DCI format 2 6 and if the UE configured by higher layer parameter *ps-TransmitOtherPeriodicCSI* to report CSI with the higher layer parameter *reportConfigType* set to 'periodic' and *reportQuantity* set to quantities other than 'cri-RSRP'. 'ssb-Index-RSRP'. 'cri-RSRP- Index'. and 'ssb-Index-RSRP- Index ' when *drx-onDurationTimer* is not started, the UE shall report CSI during the time duration indicated by *drx-onDurationTimer* in *DRX-Config* also outside active time according to the procedure described in Clause 5.2.1.4 if receiving at least one CSI-RS transmission occasion for channel measurement and CSI-RS and/or CSI-IM occasion for interference measurement during the time duration indicated by *drx-onDurationTimer* in *DRX-Config* outside DRX active time or in DRX Active Time no later than CSI reference resource and drops the report otherwise. When the UE is configured to monitor DCI format 2 6 and if the UE configured by higher layer parameter *ps-TransmitPeriodicL1-RSRP* to report L1-RSRP with the higher layer parameter *reportConfigType* set to 'periodic' and *reportQuantity* set to 'cri-RSRP', 'ssb-Index-RSRP', 'cri-RSRP-Index'. or 'ssb-Index-RSRP- Index' when *drx-onDurationTimer* is not started, the UE shall report L1-RSRP during the time duration indicated by *drx-onDurationTimer* in *DRX-Config* also outside active time according to the procedure described in clause 5.2.1.4 and when *reportQuantity* set to 'cri-RSRP' or 'cri-RSRP- Index' if receiving at least one CSI-RS transmission occasion for channel measurement during the time duration indicated by *drx-onDurationTimer* in *DRX-Config* outside DRX active time or in DRX Active Time no later than CSI reference resource and drops the report otherwise.**

Referring to Table 11, as a condition#2, when there is no corresponding CSI reference resource in a current serving cell, a related CSI report may be omitted. Herein, the CSI reference resource is a band and/or slot related to CSI and means a set of time/frequency resources that a terminal may receive a CSI measurement resource to report a CSI measurement result. In other words, the CSI reference resource is a set of resources available for CSI measurement of a terminal according to a condition such as a setting of a base station, and the terminal may calculate CSI by using at least a part of the set of resources and report the CSI. In addition, as a condition#3, when at least CSI-RS resource occasion is absent after CSI report (re)configuration, serving cell activation, BWP change, or SP-CSI activation, a related CSI report may be dropped. In addition, as a condition#4, when UE C-DRX is configured, if at least one CSI-RS resource occasion is absent, a related CSI report may be dropped.

To sum up, as shown in Table 10 and Table 11, if at least one of the following 4 conditions is satisfied, a terminal may drop or omit a CSI report.

Condition#1: If a CSI report connected with a CSI-RS transmitted in a non-active BWP is triggered through DCI, the CSI report is omitted. Herein, the non-active BWP may include a serving cell/BWP with an inactive period state of cell DTX and/or cell DRX for the serving cell/BWP where cell DTX and/or cell DRX is configured or activated, as shown in the above-described Embodiment#1 to Embodiment#3.

Condition#2: If there is no corresponding CSI reference resource in a current serving cell, a corresponding CSI report is omitted.

Condition#3: If at least one CSI-RS resource occasion is absent after CSI report (re)configuration, serving cell activation, BWP change, or activation of SP-CSI, a corresponding CSI report is omitted.

Condition#4: If case C-DRX of a UE is configured, when at least one CSI-RS resource occasion is absent, a corresponding CSI report is omitted. Specifically, if DRX is configured, the UE may transmit a corresponding CSI report when receiving at least one CSI-RS transmission occasion for channel measurement and/or CSI-RS and/or CSI-IM occasion for interference measurement in DRX active time no later than a CSI reference resource and drop the CSI report otherwise.

As for this condition, a UE C-DRX configuration described in a standard document may mean a state in which cell DTX and/or cell DRX is configured or activated, as described in Embodiment#1 to Embodiment#3 above. As for this condition, an active time or an outside-active time of UE C-DRX described in the standard document may be replaced by an active period of cell DTX and/or cell DRX or a cell DTX and/or cell DRX inactive period for a serving cell/BWP with cell DTX and/or cell DRX being configured or activated, as described in Embodiment#1 to Embodiment#3 above. In other words, according to an embodiment, when there is no CSI-RS resource occasion in a serving cell with cell DTX being configured, a corresponding CSI report may be dropped. Specifically, when cell DTX is configured, if at least one CSI-RS transmission occasion is received no later than a CSI reference resource in a serving cell having activated cell DTX for channel measurement and/or interference measurement in an active time or active period of cell DTX of the serving cell, a terminal may transmit a corresponding CSI report and drop the CSI report otherwise. Herein, the at least one CSI-RS transmission occasion may include a CSI-RS transmission occasion of a CSI-RS resource (e.g., P-CSI-RS resource or SP-CSI-RS resource). Herein, the CSI report may be transmitted based on a CSI report configuration related to a report entry at least including RI.

FIG. 19 illustrates an example of a procedure of transmitting or dropping a CSI report based on cell DTX/DRX according to an embodiment of the present disclosure. FIG. 19 exemplifies a method performed by a terminal.

Referring to FIG. 19, at step S1901, the terminal identifies an active period and/or an inactive period according to cell DTX/DRX. Based on configuration information of cell DTX/DRX received from a base station, the terminal may the active period and/or the inactive period of cell DTX/DRX.

At step S1903, the terminal determines whether or not a CSI-RS transmission occasion is received no later than a CSI reference resource. That is, the terminal evaluates a condition for dropping a CSI report related to a cell DTX/DRX operation. Specifically, the terminal determines whether or not a CSI-RS is received within a CSI reference resource corresponding to the CSI report and use the active period and/or the inactive period of cell DTX/DRX to this end. For example, if the CSI-RS transmission occasion associated with the CSI report is included in the inactive period of cell DTX, the terminal may determine that the CSI-RS transmission occasion is not received no later than the CSI reference resource.

If the CSI-RS transmission occasion is received no later than the CSI reference resource, at step S1905, the terminal transmits the CSI report. The terminal may perform measurement for CSI-RS, calculate CSI, generate the CSI report, and transmit the CSI report.

On the other hand, if the CSI-RS transmission occasion is not received no later than the CSI reference resource, at step S1907, the terminal drops the CSI report. Specifically, the terminal may not perform calculation of CSI, not generate the CSI report, or not transmit the CSI report.

The above-described conditions specify situations for omitting or dropping a CSI report. If the above-described conditions are conversely interpreted, a condition for transmitting a CSI report (hereinafter 'CSI report condition') may be derived. Herein, if no sub-configuration for a CSI report is set, the entire CSI report not satisfying a CSI report condition may be omitted/dropped. However, if at least one sub-configuration is set in one CSI report configuration, one sub-configuration may satisfy a CSI report condition, while another sub-configuration may not satisfy the CSI report condition. In this case, it may be advantageous to report CSI information corresponding to some sub-configuration that satisfies the CSI report condition.

Accordingly, according to an embodiment, a terminal may determine for each sub-configuration whether or not a CSI report condition is satisfied. For example, for a CSI report configuration including two sub-configuration, when it is determined whether or not condition#2 is satisfied, if a sub-configuration#1 satisfies condition#2 but a sub-configuration2 does not satisfy condition#2, the terminal may not drop or omit an entire corresponding CSI report. This may be applied to other conditions (e.g., conditon#1, condition#3 or condition#4). Herein, detailed operations of the terminal may be as follows.

Opt 1) The terminal may drop/omit CSI information corresponding to sub-configuration#2, generate a CSI report only with CSI corresponding to configuration#1, and give/report the CSI report to a base station as feedback. Opt 2) The terminal may give/report a CSI report including both CSI for sub-configuration#1 and CSI for sub-configuration#2 to a base station as feedback and may configure CSI for sub-configuration#2 not satisfying a CSI report condition not to be updated from previously reported information or to include a default value. In other words, CSI for sub-configuration#2 not satisfying a CSI report condition may be set to a same value as of a previous reporting occasion or to a default value and be transmitted. Herein, the default value may include a value that is preset or predefined by a base station and may be defined or set to, for example, a lowest CQI/PMI value.

For example, all sub-configurations included in a CSI report configuration may not satisfy a CSI report condition. That is, every sub-configuration included in a CSI report configuration may corresponding to one of the above-described condition#1 to condition#4. In this case, a terminal may omit/drop a corresponding CSI report.

According to another embodiment, a terminal may determine for each sub-configuration whether or not it satisfies a CSI report condition, and if at least one sub-configuration or a preset/predefined number of sub-configurations or more do not satisfy the CSI report condition, a corresponding CSI report may be omitted/dropped.

Herein, the above-described embodiments may be applied only to type 2 SD and/or type 2 SD+PD adaptation.

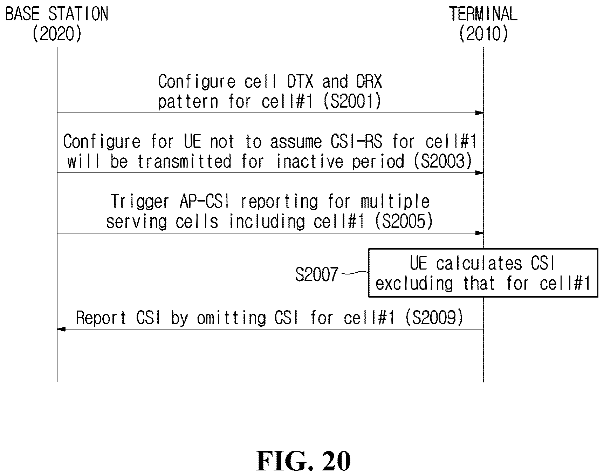

FIG. 20 illustrates an example of a procedure of performing CSI reporting in a cell DTX/DRX configuration situation according to an embodiment of the present disclosure. FIG. 20 exemplifies signal exchange between a terminal 2410 and a base station 2420.

Referring to FIG. 20, at step S2001, the base station 2420 transmits configuration information for cell DTX and/or cell DRX for a cell#1. Accordingly, the terminal 2410 receives a configuration for cell DTX and/or cell DRX for the cell#1 from the base station 2420. In other words, the base station 2420 transmits information on a pattern of cell DTX/DRX as configuration information for cell DTX/DRX for the cell#1.

At step S2003, the base station 2420 transmits configuration information specifying that a CSI-RS is not received during an inactive period of cell DTX and/or cell DRX. That is, the terminal 2410 may be configured not to receive a CSI-RS during the inactive period of cell DTX and/or cell DRX.

At step S2005, the base station 2420 transmits information that triggers an AP-CSI report for multiple serving cells including the cell#1. In other words, the base station 2420 triggers the AP-CSI report including the cell#1.

At step S2007, the terminal 2410 calculates CSI excluding the cell#1. That is, triggered CIS report configurations may include a CSI report configuration related to a corresponding CSI-RS in the cell#1, but the terminal 2410 may not perform CSI for the cell#1.

At step S2009, the terminal 2410 transmits a CSI report that omits the CSI for the cell#1. That is, the terminal reports CSI, while omitting CSI for the cell#1.

In case a base station configures a cell DTX and/or cell DRX pattern, transmission and/or reception may not be performed during a predetermined time period, thereby saving energy. Herein, during a period where the base station is not expected to transmit a CSI-RS, a terminal does not receive the CSI-RS so that a corresponding reporting operation may not be performed either. Thus, an advantage is expected in reducing terminal complexity or terminal power consumption.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

Industrial Applicability

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1. A method performed by a terminal in a wireless communication system, the method comprising:

   receiving first configuration information on a channel state information (CSI) resource;
   receiving second configuration information for a CSI report configuration;
   receiving third configuration information on cell discontinuous transmission (DTX); and
   transmitting or dropping a CSI report corresponding to the CSI report configuration based on the cell DTX,
   wherein, based on the cell DTX being configured, the CSI report is transmitted no later than a CSI reference resource based on at least one CSI-RS transmission occasion being received on a serving cell with activated cell DTX for channel measurement or interference measurement in an active time or active period of cell DTX of the serving cell, and
   wherein, based on the cell DTX being configured, the CSI report is dropped no later than the CSI reference resource based on at least one CSI-RS transmission occasion not being received on a serving cell with activated cell DTX for channel measurement or interference measurement in an active time or active period of cell DTX of the serving cell.

2. The method of claim 1, wherein the at least one CSI-RS transmission occasion includes a CRI-RS transmission occasion of a P-CSI-RS resource or an SP-CSI-RS resource.

3. The method of claim 1, wherein the CSI report configuration includes a plurality of sub-configurations, and wherein CSI corresponding to each of the sub-configurations is individually transmitted or dropped based on whether or not a CSI report condition is satisfied.

4. The method of claim 1, wherein the CSI report configuration includes a plurality of sub-configurations, and wherein CSI corresponding to the sub-configurations is dropped based on at least one of the sub-configurations not satisfying a CSI report condition.

5. The method of claim 1, wherein the CSI report configuration includes a plurality of sub-configurations, and wherein CSI corresponding to the sub-configurations is dropped based on CSI equal to or greater than a threshold value not satisfying a CSI report condition among the sub-configurations.

6. The method of claim 1, wherein the CSI report configuration includes a plurality of sub-configurations,

   wherein first CSI corresponding a first sub-configuration among the sub-configurations is transmitted based on the first CSI satisfying a CSI report condition, and
   wherein second CSI corresponding a second sub-configuration among the sub-configurations is set to a same value as on a previous report occasion or to a default value based on the second CSI not satisfying the CSI report condition.

7. The method of claim 1, wherein the transmitting or dropping of the CSI report corresponding to the CSI report configuration based on the cell DTX comprises receiving a CSI-RS in a first cell and dropping a CSI report in a second cell during an inactive period according to a cell DTX operation of the first cell, based on being configured to transmit the CSI report, which is determined based on the CSI-RS, through the second cell.

8. The method of claim 7, wherein the dropping of the CSI report in the second cell during the inactive period according to the cell DTX operation of the first cell comprises dropping the CSI report based on transmission of the CSI-RS associated with the CSI report being suspended by the inactive period of the first cell.

9. The method of claim 1, wherein the transmitting or dropping of the CSI report corresponding to the CSI report configuration based on the cell DTX comprises receiving a CSI-RS in the first cell and deactivating a CSI report in the second cell during an inactive period according to cell DTX of the first cell, based on being configured to transmit the CSI report, which is determined based on the CSI-RS, through the second cell, and

wherein the deactivated CSI report is activated based on an on-duration arriving according to the cell DTX of the first cell.

10. The method of claim 1, wherein the transmitting or dropping of the CSI report corresponding to the CSI report configuration based on the cell DTX comprises receiving a CSI-RS in the first cell and deactivating a CSI report in the second cell during an inactive period according to cell DTX of the first cell, based on being configured to transmit the CSI report, which is determined based on the CSI-RS, through the second cell, and
wherein the deactivated CSI report is activated by signaling for activation.

11. A terminal in a wireless communication system, the terminal comprising:

a transceiver; and
a processor coupled with the transceiver,
wherein the processor is configured to:

receive first configuration information on a channel state information (CSI) resource,
receive second configuration information for a CSI report configuration,
receive third configuration information on cell discontinuous transmission (DTX), and
transmit or drop a CSI report corresponding to the CSI report configuration based on the cell DTX,
wherein based on the cell DTX being configured, the CSI report is transmitted no later than a CSI reference resource based on at least one CSI-RS transmission occasion being received on a serving cell with activated cell DTX for channel measurement or interference measurement in an active time or active period of cell DTX of the serving cell, and
wherein based on the cell DTX being configured, the CSI report is dropped no later than the CSI reference resource based on at least one CSI-RS transmission occasion not being received on a serving cell with activated cell DTX for channel measurement or interference measurement in an active time or active period of cell DTX of the serving cell.

12. A communication device comprising:

at least one processor; and
at least one computer memory coupled with the at least one processor and storing an instruction that instructs operations when executed by the at least one processor,
wherein the operations comprises:

receiving first configuration information on a channel state information (CSI) resource;
receiving second configuration information for a CSI report configuration;
receiving third configuration information on cell discontinuous transmission (DTX); and
transmitting or dropping a CSI report corresponding to the CSI report configuration based on the cell DTX,
wherein based on the cell DTX being configured, the CSI report is transmitted no later than a CSI reference resource based on at least one CSI-RS transmission occasion being received on a serving cell with activated cell DTX for channel measurement or interference measurement in an active time or active period of cell DTX of the serving cell, and
wherein based on the cell DTX being configured, the CSI report is dropped no later than the CSI reference resource based on at least one CSI-RS transmission occasion not being received on a serving cell with activated cell DTX for channel measurement or interference measurement in an active time or active period of cell DTX of the serving cell.

13. A non-transitory computer-readable medium storing at least one instruction, the non-transitory computer-readable medium comprising the at least one instruction that is executable by a processor,
wherein the at least one instruction instructs a device to:

receive first configuration information on a channel state information (CSI) resource,
receive second configuration information for a CSI report configuration,
receive third configuration information on cell discontinuous transmission (DTX), and
transmit or drop a CSI report corresponding to the CSI report configuration based on the cell DTX,
wherein based on the cell DTX being configured, the CSI report is transmitted no later than a CSI reference resource based on at least one CSI-RS transmission occasion being received on a serving cell with activated cell DTX for channel measurement or interference measurement in an active time or active period of cell DTX of the serving cell, and

wherein based on the cell DTX being configured, the CSI report is dropped no later than the CSI reference resource based on at least one CSI-RS transmission occasion not being received on a serving cell with activated cell DTX for channel measurement or interference measurement in an active time or active period of cell DTX of the serving cell.

**FIG. 1**

**FIG. 2**

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S301    S302    S303    S304    S305    S306    S307    S308

- DL/UL ACK/NACK
- UE CQI/PMI RI REPORT
  USING PUSCH AND PUCCH

**FIG. 3**

**FIG. 4**

**FIG. 5**

Repetition
"on"

(a)

CRI feedback

Resource #0
Resource #1
Resource #2

Repetition
"off"

(b)

## FIG. 6

TERMINAL                                    BASE STATION

NZP CSI-RS resource set IE(S710)

RECEIVE CSI RESORUCE(S)
CONFIGURED WITH REPETITON 'ON'
THROUGH SAME TX BEAM(S720)

DETERMINE RX BEAM — S730

OMIT CSI REPORT(NO REPORT)(S740)

## FIG. 7

TERMINAL                                    BASE STATION

NZP CSI-RS resource set IE(S810)

RECEIVE CSI RESOURCE(S)
CONFIGURED WITH REPETITON 'OFF'
THROUGH DIFFERENT TX BEAMS(S820)

DETERMINE BEST BEAM ~ S830

CSI REPORT(CRI/L1-RSRP)(S840)

**FIG. 8**

Repetition        Repetition
   "on"              "off"

0   1   2   3   4   5   6   7   8   9   10   11   12   13

frequency domain

Resource #0    Resource #1    Resource #2

RX beam        TX beam
sweeping       sweeping

time domain

**FIG. 9**

RX BEAM SWEEPING
OF BASE STATION

RECEIVE SRS#0
RECEIVE SRS#1
RECEIVE SRS#N

. . .

SRS
#0,1,...N

TX BEAM OF
TERMINAL (FIXED)

(a)

RX BEAM FIXED
BY BASE STATION

SRS#0
SRS#1

TX BEAM SWEEPING
OF TERMINAL

(b)

**FIG. 10**

TERMINAL                          BASE STATION

SRS Config. IE
(usage BM, SRS-Spatial
Relation Info)(S1110)

DETERMINE TX BEAM
FOR SRS RESOURCE          ~S1120

TRANSMIT SRS THROUGH
DETERMINED TX BEAM(S1130)

feedback(S1140)

**FIG. 11**

```
        ┌─────────┐
        │  START  │
        └────┬────┘
             │
             ▼
   ┌──────────────────────┐
   │ IDENTIFY NES SOLUTION(S) │
   └──────────┬───────────┘
              │
              ▼
   ┌──────────────────────┐
   │ PERFORM SIGNALING FOR NES │
   └──────────┬───────────┘
              │
              ▼
   ┌──────────────────────┐
   │ PERFORM OPERATIONS FOR NES │
   └──────────┬───────────┘
              │
              ▼
        ┌─────────┐
        │   END   │
        └─────────┘
```

## FIG. 12

TERMINAL                                    BASE STATION

SYSTEM INFORMATION

┌──────────────────────────┐
│ IDENTIFY INFORMATION     │
│ RELATED TO CELL DTX/DRX  │
└──────────────────────────┘

RANDOM ACCESS

CONFIGURATION INFORMATION

CONTROL INFORMATION

PERFORM COMMUNICATION
BASED ON CELL DTX/DRX

## FIG. 13

**FIG. 14**

**FIG. 15A**          **FIG. 15B**          **FIG. 15C**

Periodicity(1602)

offset
(1604)

On
duration
(1606)

**FIG. 16**

START

S1701

RECEIVE CONFIGURATION
INFORMATION ON CSI RESOURCE

S1703

RECEIVE CONFIGURATION
INFORMATION ON CSI REPORT

S1705

RECEIVE CONFIGURATION
INFORMATION ON CELL DTX/DRX

S1707

PERFORM CSI REPORTING OPERATION
BASED ON CELL DTX/DRX OPERATION

END

**FIG. 17**

START

RECEIVE CONFIGURATION
INFORMATINO ON CSI RESOURCE — S1801

RECEIVE CONFIGURATION
INFORMATION ON CSI REPORT — S1803

DETERMINE WHETHER OR NOT CONDITION
FOR CSI DROP IS SATISFIED — S1805

TRANSMIT OR DROP CSI REPORT — S1807

END

**FIG. 18**

START

IDENTIFY ACTIVE/NON-ACTIVE
PERIOD ACCORDING TO CELL DTX/DRX — S1901

CSI-RS
TRANSMISSION
OCCASION IS RECEIVED NO LATER
THAN CSI REFERENCE
RESOURCE? — S1903

NO

YES

TRANSMIT CSI REPORT — S1905

DROP CSI REPORT — S1907

END

**FIG. 19**

BASE STATION
(2020)

TERMINAL
(2010)

Configure cell DTX and DRX
pattern for cell#1 (S2001)

Configure for UE not to assume CSI-RS for cell#1
will be transmitted for inactive period (S2003)

Trigger AP-CSI reporting for multiple
serving cells including cell#1 (S2005)

S2007 — | UE calculates CSI
excluding that for cell#1

Report CSI by omitting CSI for cell#1 (S2009)

**FIG. 20**

## INTERNATIONAL SEARCH REPORT

| International application No. |
| --- |
| **PCT/KR2024/006360** |

### A. CLASSIFICATION OF SUBJECT MATTER

**H04W 76/28**(2018.01)i; **H04W 52/02**(2009.01)i; **H04B 7/06**(2006.01)i; **H04W 72/21**(2023.01)i; **H04W 72/23**(2023.01)i; **H04L 5/00**(2006.01)i

According to International Patent Classification (IPC) or to both national classification and IPC

### B. FIELDS SEARCHED

Minimum documentation searched (classification system followed by classification symbols)

H04W 76/28(2018.01); H04L 1/00(2006.01); H04L 5/00(2006.01); H04W 16/32(2009.01); H04W 24/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널 상태 정보 자원(CSI resource), 셀 불연속송신(cell DTX), CSI 보고 드롭 (report drop), CSI-RS 송신 기회(TXOP)

### C. DOCUMENTS CONSIDERED TO BE RELEVANT

| Category* | Citation of document, with indication, where appropriate, of the relevant passages | Relevant to claim No. |
| --- | --- | --- |
| Y<br>A | 3GPP; TSG RAN; Study on network energy savings for NR (Release 18). 3GPP TR 38.864 V18.1.0. 30 March 2023.<br>    See pages 24, 33-34 and 54. | 1-5,11-13<br>6-10 |
| Y | ERICSSON. Draft CR aligning parameter names related to CSI report procedure. R1-2301662, 3GPP TSG-RAN WG1 Meeting # 112. Athens, Greece. 17 February 2023.<br>    See page 4. | 1-5,11-13 |
| Y | MODERATOR (HUAWEI). FL summary#2 for spatial and power domain techniques for R18 NES. R1-2301965, 3GPP TSG-RAN WG1 Meeting #112. Athens, Greece. 28 February 2023.<br>    See page 29. | 3-5 |
| A | WO 2022-154611 A1 (LG ELECTRONICS INC.) 21 July 2022 (2022-07-21)<br>    See paragraphs [0163]-[0176]; and figure 7. | 1-13 |

✓ Further documents are listed in the continuation of Box C.      ✓ See patent family annex.

| | |
| --- | --- |
| \*    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **21 August 2024** | **21 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/006360**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2022-0156502 A (ELECTRONICS AND TELECOMMUNICATIONS RESEARCH INSTITUTE) 25 November 2022 (2022-11-25) <br> See paragraphs [0171]-[0177]. | 1-13 |

Form PCT/ISA/210 (second sheet) (July 2022)

**INTERNATIONAL SEARCH REPORT**
Information on patent family members

International application No.

**PCT/KR2024/006360**

| Patent document cited in search report | | | Publication date (day/month/year) | Patent family member(s) | | | Publication date (day/month/year) |
|---|---|---|---|---|---|---|---|
| WO | 2022-154611 | A1 | 21 July 2022 | EP | 4280493 | A1 | 22 November 2023 |
| | | | | KR | 10-2023-0128477 | A | 05 September 2023 |
| KR | 10-2022-0156502 | A | 25 November 2022 | KR | 10-2015-0088716 | A | 03 August 2015 |
| | | | | US | 2015-0215856 | A1 | 30 July 2015 |
| | | | | US | 9603084 | B2 | 21 March 2017 |

Form PCT/ISA/210 (patent family annex) (July 2022)